# EUROPEAN PATENT APPLICATION

(11) **EP 4 362 271 A2**
(43) Date of publication of application: **01.05.2024**
(21) Application number: 23201664.2
(22) Date of filing: 04.10.2023
(51) Int. Cl.: H02J 7/00, B62M 6/90, H02J 7/14

(54) **ENERGY STORAGE DEVICE FOR A BICYCLE**

(30) Priority: 04.10.2022 US 202263412899 P; 25.09.2023 US 202318473561
(71) Applicant: SRAM, LLC., Chicago, IL 60607 (US)
(72) Inventor: Braedt, Henrik, 97424 Schweinfurt (DE); Heyna, Sebastian, 97424 Schweinfurt (DE); Sessions, Shelby, Chicago, 60607 (US)
(74) Representative: Thum, Bernhard

(57) **Abstract**

An energy storage device for a bicycle includes a housing, a plurality of battery cells, a battery management system, and a charge controller disposed in the housing, a battery contact connection and a charge port, separate and spaced apart from the battery contact connection. The charge port may include a DC charge port and a USB C charge port. A bicycle including an energy storage device, and a method of charging an energy storage device are also provided.

## Description

This application claims the benefit ofU.S. Provisional Application No. 63/412,899, filed October 04, 2022 and entitled "Energy Storage Device for a Bicycle," the entire disclosure of which is incorporated herein by reference.

### Field of the Disclosure

The present application generally relates to an energy storage device for a bicycle, a bicycle having an energy storage device, and methods for assembling and using the energy storage device on the bicycle.

### Background

Electric assist, or electrically powered, bicycles typically are powered with a battery that includes some configuration of individual battery cells and a battery management system. The battery typically is charged with a charger located external to, and separate from, the battery. The charger may include an AC-DC converter and a charge controller. The separate charge controller communicates with the battery via a wired communication protocol, and receives information from the battery in order to safely charge the battery. The wired connection between the battery and the charger, and charge controller, is susceptible to damage and failure due to the repeated connection/disconnection of associated connectors, and may present a frequent failure point in the charging system. Such failures may lead to downtime, increased maintenance and expenses, and frustration experienced by the end user.

### Summary

In one aspect, one embodiment of an energy storage device for a bicycle includes a housing and a mounting arrangement adapted for mounting to the bicycle. A plurality of battery cells is disposed in the housing. A battery management system also disposed in the housing is connected to the plurality of cells, wherein the battery management system is configured to monitor the voltage of the plurality of battery cells. A charge controller is disposed in the housing and communicates with the battery management system, wherein the charge controller is connected to the plurality of cells and is configured to modulate a current supplied to the plurality of cells. The energy storage device includes a charge port mounted on the housing and configured for electrical connection to a bicycle drive unit. In one embodiment, a second charge port, located adjacent to, or separate and spaced apart from, the first charge port, is mounted on the housing and is configured for connection to an external power source. In one embodiment, the energy storage device includes a radio for wireless communication, and which forms at least in part a wireless communication system.

In another aspect, an energy storage device for a bicycle includes a housing, a plurality of battery cells disposed in the housing, a battery management system disposed in the housing and connected to the plurality of cells, wherein the battery management system is configured to monitor the voltage of the plurality of battery cells, and a charge controller disposed in the housing and communicating with the battery management system, wherein the charge controller is connected to the plurality of cells and is configured to modulate a current supplied to the plurality of cells. A battery contact connection is located on the housing and is configured for electrical connection to a bicycle drive unit. A USB C charge port may also be located on the housing and is separate from the battery contact connection.

In yet another aspect, one embodiment of a bicycle includes a frame and an energy storage device having a housing mounted to the frame. The energy storage device includes a plurality of battery cells disposed in the housing, a battery management system disposed in the housing and connected to the plurality of cells, wherein the battery management system is configured to monitor the voltage of the plurality of battery cells, and a charge controller disposed in the housing and communicating with the battery management system, wherein the charge controller is connected to the plurality of cells and is configured to modulate a current supplied to the plurality of cells. A primary charge port is mounted on the housing and is configured for connection to an external power source. A secondary charge port is mounted to the frame and is configured for connection to the external power source, wherein the secondary charge port is connected to the energy storage device.

In yet another aspect, one embodiment of a method of charging an energy storage device includes connecting a first power source to a first charge port and connecting a second power source to a second charge port. The method further includes determining a first charging characteristic of the first power source with a microcontroller, determining a second charging characteristic of the second power source with the microcontroller, comparing the first and second charging characteristics, and selecting the first power source or the second power source based on the comparison of the first and second charging characteristics. The method further includes supplying a current to the plurality of battery cells with the selected one of the first and second power sources. In one embodiment, the method may further include connecting a third power source to a battery contact connection, determining a third charging characteristic, comparing the third charging characteristic with the first and second charging characteristic, selecting the first, second or third power source based on that comparison, and supplying a current from the selected power source.

In yet another aspect, one embodiment of a fastener and tool combination for use with a bicycle having an energy storage device includes a shaft having longitudinally spaced first and second ends. The first end includes a threaded portion and a tool component extending axially from the threaded portion. The shaft further includes a tube portion open at the second end. A handle is axially moveable from a stored position inside the tube portion to an extended position outside the tube portion, wherein the handle is rotatable relative to the second end from a longitudinal orientation to a transverse orientation- when in the extended position.

In yet another aspect, one embodiment of a bash guard for a bicycle drive unit includes a rigid support member having opposite first and second ends, a plate portion extending between the first and second ends and opposite side flanges. Each of the side flanges defines a load bearing surface, wherein the first end comprises a first mounting feature and wherein the second end comprises a second mounting feature. A cover is disposed over an outer surface of the support member.

In yet another aspect, one embodiment of a drive unit for a bicycle includes a housing having a first support and a second support. A motor is disposed in the housing and defines a rotation axis, wherein the first and second supports are angularly spaced relative to the rotation axis and define a triangle with the rotation axis. A guard is pivotally coupled to the first support, wherein the guard is pivotable between a closed position, wherein the guard forms at least a portion of a bridge between the first and second supports and defines in part a closed loop with the housing, and an open position, wherein the guard is disengaged from the second support and an opening is formed between the first and second supports.

The various embodiments of the energy storage device, bicycle and methods for the use and assembly thereof provide significant advantages over other energy storage devices, bicycles, and methods. For example and without limitation, by locating the charge controller in the energy storage device, a single AC-DC power source may be used as a charger, regardless of the battery voltage, chemistry, or layout. Additionally, having the charge controller located in the energy storage device, together with a wireless communication radio, allows communication with energy storage device without the need for data wires extending from the energy storage device, and the attendant potential for damage and/or failure. Moreover, the charge source does not need to have information about the state of the energy storage device, because the charge current control is handled internally.

Another advantage is that the system allows for multiple charge current sources. Charge current may by supplied by a DC source, primary or secondary, or the charge current may be supplied by a USB C power delivery source, whether integral to the energy storage device or remote thereto. This integration permits the end user to use a single standardized charger for their accessories, such as a phone or laptop, and also for their bicycle energy storage device. Conversely, the energy storage device may be used as a charger for external USB C devices connected to the energy storage device, including for example and without limitation a cellphone, laptop and/or tablet.

Another advantage stemming from the charge controller being integrated into the energy storage device is that the energy storage device may receive data about energy use from a connected drive unit while the user is riding the bicycle. Using this data, an estimation of energy use per mile may be calculated, allowing the user to customize the level of charging, which may protect and lengthen the overall life of the energy storage device, and the plurality of battery cells in particular.

Additional advantages are realized by the combination fastener and tool, which allows for a single component to be used both as a locking fastener for securing the energy storage device in the bicycle, as well as a tool for removing the fastener and thereafter engaging and disengaging the bash guard with the drive unit and/or frame. The integrated nature of the fastener and tool ensures that the user always has access to the tool, for example when riding in a remote location, while maintaining a single integrated component that minimizes the risk of losing one or more of the subcomponents.

The reinforced bash guard also provides advantages. The guard is capable of beaming any impact loads to the support members, thereby protecting the energy storage device. At the time, the replaceable cover allows the user to customize the guard, for example by customizing the color and/or graphics thereon, while also allowing for easy replacement if damaged due to an impact event.

The foregoing paragraphs have been provided by way of general introduction and are not intended to limit the scope of the claims presented below. The various preferred embodiments, together with further advantages, will be best understood by reference to the following detailed description taken in conjunction with the accompanying drawings.

### Brief Description of the Drawings

Objects, features, and advantages of the present invention will become apparent upon reading the following description in conjunction with the drawing figures, in which:
FIG. 1 is a side view of one example of a bicycle.
FIG. 2 is a side view of a bicycle frame configured with exemplary auxiliary charging ports.
FIG. 3 is a side perspective view of an energy storage device mounted to a bicycle frame.
FIG. 4 is a side perspective view of one embodiment of an energy storage device.
FIG. 5 is an end view of one embodiment of the energy storage device taken along line 5-5 of Figure 4.
FIG. 6 is an end view of another embodiment of an energy storage device taken along line 6-6 of Figure 4.
FIGS. 7A, 7B and 7C are outer perspective views of an auxiliary charge port configured respectively with a DC charge port, combined DC and USB C charge ports, and a USB C charge port.
FIGS. 8A, 8B and 8C are block diagrams corresponding to the auxiliary charge ports shown in Figures 7A, 7B and 7C respectively.
FIG. 9 is a side perspective views of one embodiment of an energy storage device with a side wall cover removed.
FIGS. 10A and 10B are opposite side views of the one embodiment of an energy storage device with opposite side wall covers removed.
FIG. 11 is a plan view of one embodiment of a printed circuit board.
FIG. 12 is a block diagram illustrating one embodiment of an energy storage device.
FIG. 13 is a diagram illustrating one embodiment of a battery pack.
FIG. 14 is a block diagram illustrating one embodiment of an energy storage device.
FIGS. 15A, 15B and 15C are flow charts illustrating alternative charge source selection embodiments.
FIG. 16 is a block diagram illustrating one embodiment of a charge source selection system.
FIG. 17 is a side view of an alternative embodiment of a bicycle frame configured with exemplary auxiliary charging ports.
FIG. 18 is a side view of an alternative embodiment of an energy storage device mounted to a bicycle frame.
FIG. 19 is a perspective view of an alternative embodiment of an energy storage device.
FIG. 20A is an end view of one embodiment of the energy storage device taken along line 20A-20A of Figure 19.
FIG. 20B is an end view of another embodiment of an energy storage device taken along line 20B-20B of Figure 4.
FIG. 21 is a side perspective views of an alternative embodiment of an energy storage device with a side wall cover removed.
FIG. 22 is a side view of PCB assembly taken along line 22-22 of Figure 21.
FIG. 23 is an end view of the PCB assembly taken along line 23-23 of Figure 21.
FIG. 24 is a side view of one embodiment of a PCB.
FIG. 25 is side view of an energy storage device being disengaged from a drive unit with a bash guard in an open position.
FIG. 26 is perspective view of an energy storage device engaged with a drive unit and a bash guard in a closed position.
FIG. 27 is a side view of an energy storage device engaged with a drive unit and a bash guard in a closed position.
FIG. 28 is a perspective cross-sectional view of the energy storage device and drive unit taken along line 28-28 in Figure 27 with the energy storage device being secured to the drive unit.
FIG. 29 is a cross-sectional view of the energy storage device engaged with unit and the bash guard being secured in a closed position.
FIG. 30A is a side view of the combination energy storage locking fastener and bash guard closing and opening tool in a locking configuration.
FIG. 30B is a side view of the combination energy storage locking fastener and bash guard closing and opening tool in a tool configuration.
FIG. 30C is an exploded view of a combination energy storage locking fastener and bash guard closing and opening tool.
FIG. 31 is a perspective view of a bash guard.
FIG. 32 is a cross-sectional view of the bash guard taken along line 31-31 of Figure 32.
FIG. 33 is a side view of an alternative embodiment of an energy storage device with a sidewall cover removed.
FIG. 34 is a cross-sectional view of the energy storage device taken along line 34-34 of Figure 33.
FIG. 35 is an exploded view of one embodiment of a bash guard.

### Detailed Description of the Disclosure

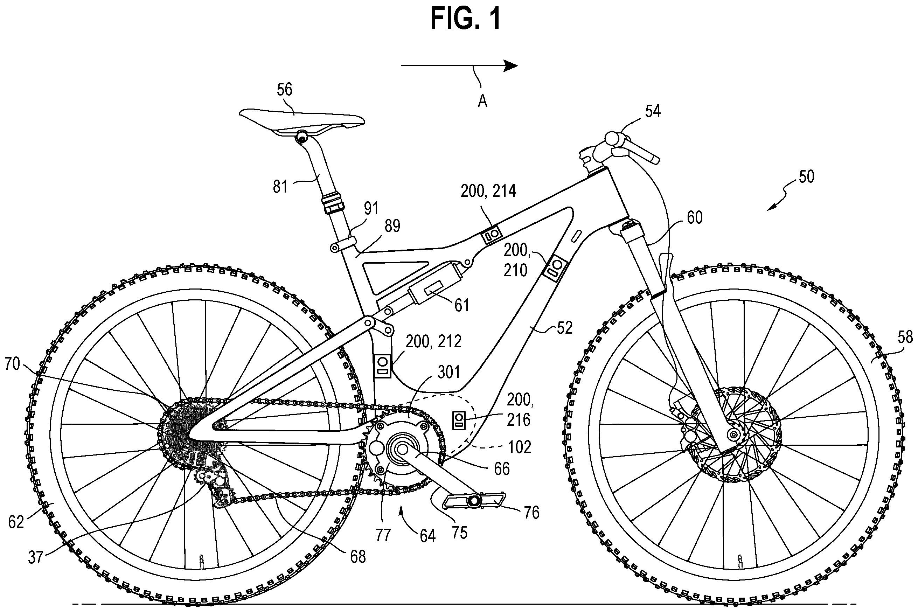

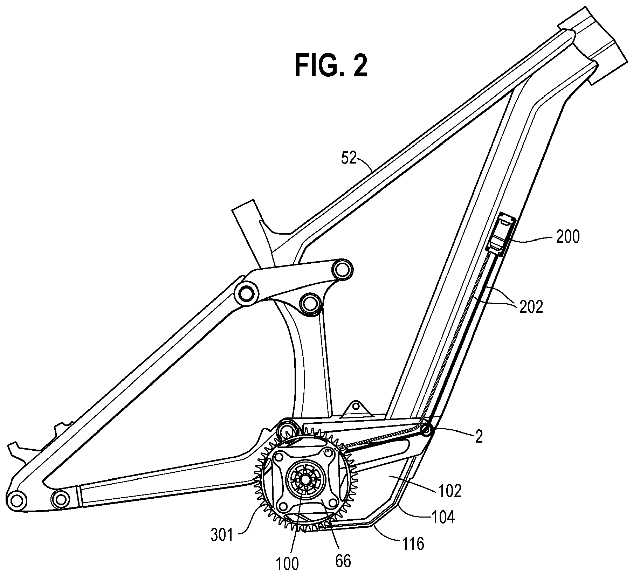

It should be understood that the term "plurality," as used herein, means two or more. The term "longitudinal," as used herein means of or relating to a length or lengthwise direction. The term "lateral," as used herein, means situated on, directed toward or running in a side-to-side direction. The term "coupled" means connected to or engaged with, whether directly or indirectly, for example with an intervening member, and does not require the engagement to be fixed or permanent, although it may be fixed or permanent. The term "connected" may refer to an electrical or mechanical connection. The term "communicating" refers to a connection allowing for the transfer of power and/or data, and may include a wired or wireless connection. The terms "first," "second," and so on, as used herein are not meant to be assigned to a particular component so designated, but rather are simply referring to such components in the numerical order as addressed, meaning that a component designated as "first" may later be a "second" such component, depending on the order in which it is referred. It should also be understood that designation of "first" and "second" does not necessarily mean that the two components or values so designated are different, meaning for example a first direction may be the same as a second direction, with each simply being applicable to different components. The terms "upper," "lower," "rear," "front," "fore," "aft," "vertical," "horizontal," "right," "left," "inboard," "outboard" and variations or derivatives thereof, refer to the orientations of an exemplary bicycle 50, shown in FIG. 1, from the perspective of a user seated thereon, for example with an "inboard" component or feature being closer to a vertical mid-plane of the bicycle extending in a direction A. The term "transverse" means non-parallel. The terms "outer" and "outwardly" refers to a direction or feature facing away from a centralized location, for example the phrases "radially outwardly," "radial direction" and/or derivatives thereof, refer to a feature diverging away from a centralized location, for example a rotation axis 2 of a bash guard as shown in FIG. 2. Conversely, the terms "inward" and "inwardly" refers to a direction facing toward the centralized or interior location. The term "subassembly" refers to an assembly of a plurality of components, with subassemblies capable of being further assembled into other subassemblies and/or a final assembly, such as the bicycle 50.

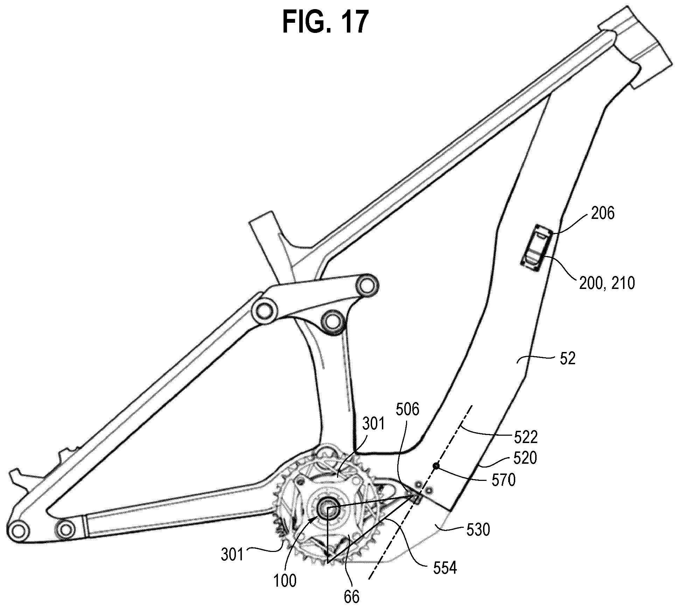

FIGS. 1 and 17 illustrates one example of a human powered vehicle, which may also include an electrically powered drive system. In this example, the vehicle is one possible type of bicycle 50, such as a mountain bicycle. The bicycle 50 has a frame 52, handlebars 54 near a front end of the frame 52, and a seat or saddle 56 for supporting a rider over a top of the frame 52. The bicycle 50 also has a first or front wheel 58 carried by a front fork subassembly 60 supporting the front end of the frame 52. The bicycle 50 also has a second or rear wheel 62 supporting a rear end of the frame 52. The rear end of the frame 52 may be supported by a rear suspension component 61, such as a rear shock. The bicycle 50 has a drive train 64 with a crank assembly 66 that is operatively coupled via a roller chain 68 to a rear cassette 70 or a driven sprocket assembly near the hub providing a rotation axis of the rear wheel 62. The crank assembly 66 includes at least one, and typically two, crank arms 75 and pedals 76, along with a front chainring assembly 301 or a drive sprocket assembly. A crank spindle or shaft may connect the two crank arms. The crank shaft defines a center rotational axis of the chainring assembly 301. The crank assembly may also include other components.

A rear gear change device 37, such as a derailleur, is disposed at the rear wheel 62 to move the roller chain 68 through different sprockets of the cassette 70. In one embodiment, a front gear changer device (not shown), such as a derailleur, may be provided to move the chain 68 through multiple sprockets of the chainring assembly 301, if present. In the illustrated example, the saddle 56 is supported on a seat post 81 having an end portion received in a top of a frame seat tube 89 of the frame. A clamping ring 91 may be tightened to secure the upper seat post 81 to the lower frame seat tube 89. In FIG. 1, the arrow A depicts a normal riding or forward moving direction of the bicycle 50. The drive train may be configured with a power meter device 77.

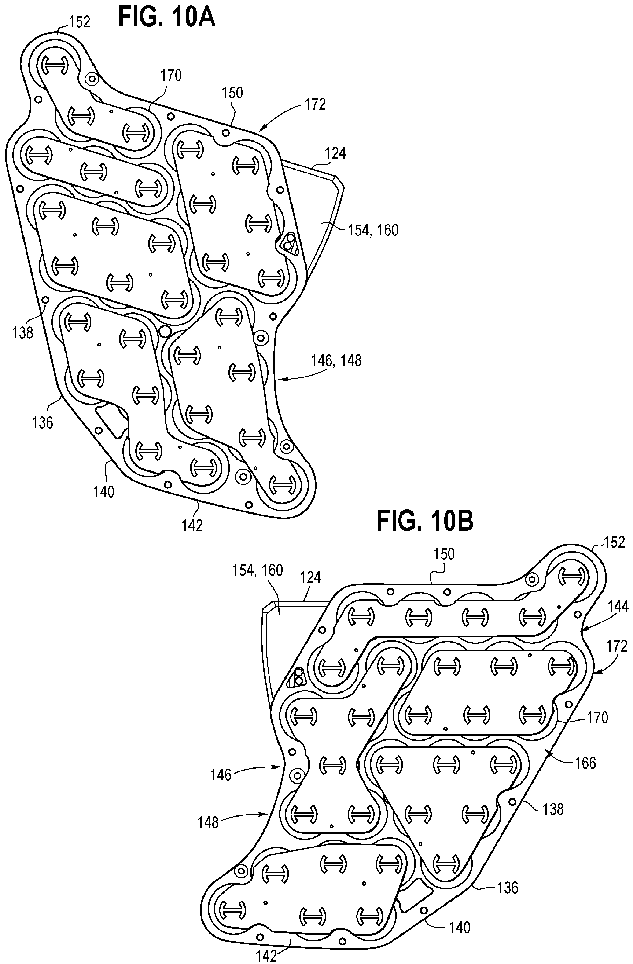

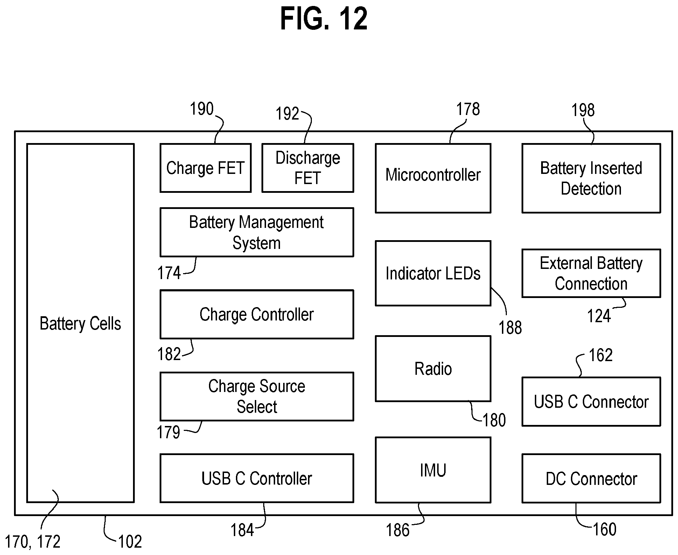

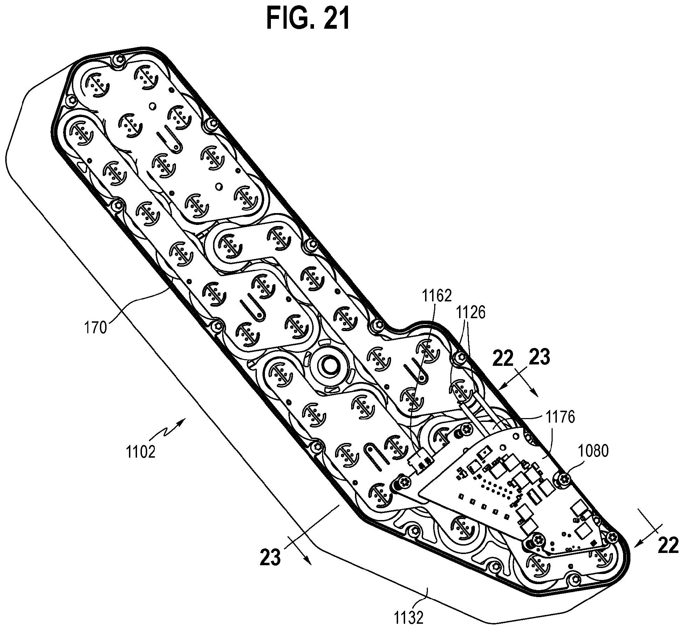

Referring to FIGS. 1-13 and 17-24, the bicycle 50 includes a drive unit 100 mounted on the frame 52 and coupled to the crank assembly 66. The drive unit 100 may be powered to assist, partially or entirely, with the rotation of the crank assembly 66, the associated movement of the chain 68, and the associated rotation of the cassette 70 and rear wheel 62. The drive unit 100 may be electrically coupled to an energy storage device 102, 1102, otherwise referred to as a battery, which supplies power to the drive unit 100.

The energy storage device 102 is held in place by an upper contact 126 engaging a drive unit battery contact connection 124, and a bash guard 104 mounted to the frame 52 at a mounting feature 106, configured as a lug in one embodiment. The mounting feature 106 of the bash guard 104 defines a rotation axis 2 and includes an opening that receives a fastener 108 (e.g., pin or shaft), which secures the mounting feature to the frame 52. The bash guard 104 incudes a detent feature that engages the energy storage device. The bash guard 104 may rotate around the axis 2. The bash guard 104 includes a second mounting feature 110, configured as a lug in one embodiment, which is further connected to the frame 52 at a second connection point, defined by a releasable, or removeable fastener 112. In one embodiment, the fastener 112 is configured as a pin, which may be inserted through an opening in the mounting feature 110 in the bash guard 104 and engaged with corresponding openings located on the bicycle frame 52 or drive unit 100. The fastener 112 may be removed, such that the bash guard 104 may be rotated about the axis 2 and thereby lowered. The bash guard 104 includes a plate/support structure 116 extending between the mounting features 106, 110.

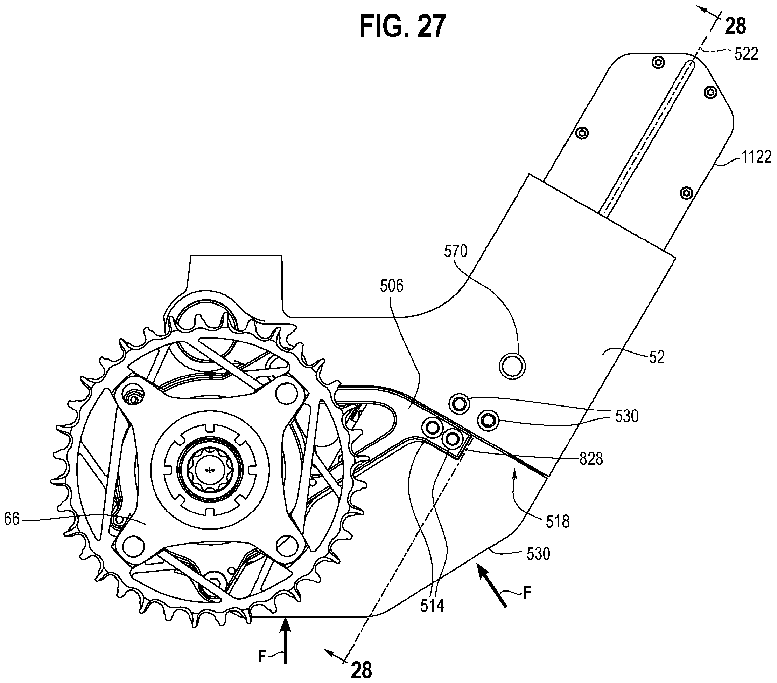

Referring to FIGS. 17, 18, and 25-28, the drive unit 100 includes a housing 501 having a cylindrical shell 500 sandwiched between laterally spaced side covers 502 that are clamped with a plurality of fasteners 504. Each side cover 502 has a forwardly and downwardly extending cantilever arm 506. A U-shaped support bracket 508 includes a pair of side arms 510 and a laterally extending cross member 512 joining the side arms. The side arms 510 are coupled to the cantilever arms 506 with a pair of fasteners 514, with the support bracket and housing forming a loop 516 defining a mouth to an interior cavity 518 of a downtube portion 520 of the frame 52. The downtube 520 and cavity define a longitudinal axis 522. A guide 524, configured in one embodiment as a slide block, extends laterally inwardly from the side arms 510. The side arms each include a forwardly and upwardly extending flange 526, parallel to the axis 522 in one embodiment, having aligned openings 528, which are also in alignment with the guide 524. In one embodiment, the arms 510, and flange 526 in particular, are disposed inside the cavity 518 of the frame and may also be secured to the frame 52 with fasteners 514. In one embodiment, the cantilever arms 506 may be attached directly to the frame 52, with the frame having guides 524 positioned on opposite sides of the cavity 518.

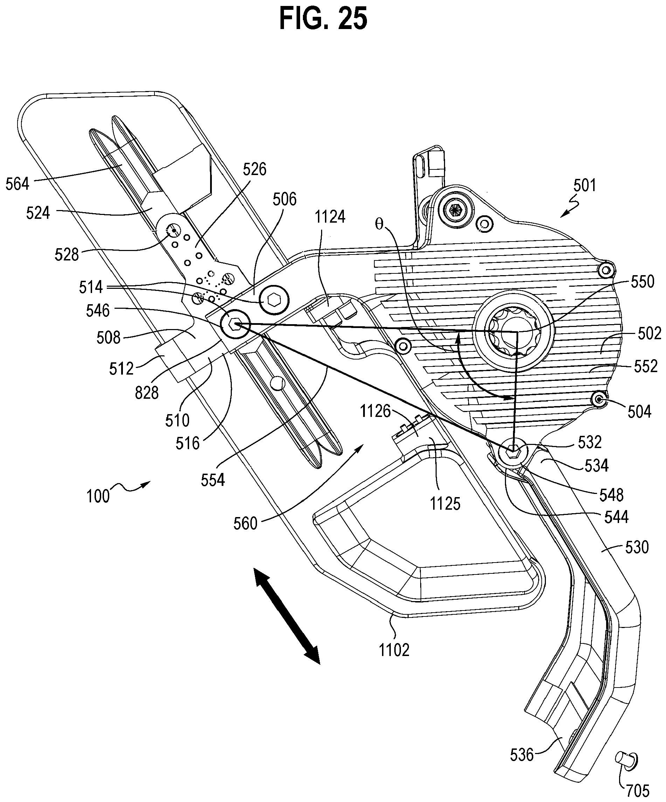

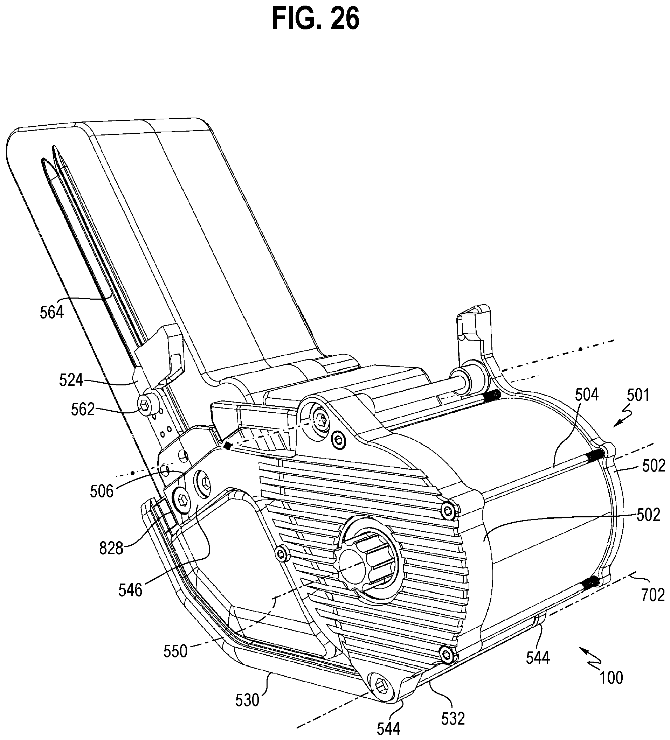

A bash guard 530 has a first end 534 pivotally attached to the housing with a hinge pin 532, which extends between the side covers 502. An opposite end 536 of the bash guard overlies and may be secured to the cross member 512 of the support bracket 508 in a closed position as shown in FIGS. 26-28. The housing 501, and the arms 506 and hinge lugs 544 of the side covers 502 in particular, define first and second supports 546, 548 respectively for the bash guard. As shown in FIG. 25, the first and second support 546 and 548 are angularly spaced (Θ) relative to a rotation axis 550 of a motor 552 disposed in the housing, and define a triangle 554 with the rotation axis 550. The bash guard 530, in a closed position, and the support bracket 508 define a closed loop load path back to the drive unit housing 501 and ultimately the frame 52, to which the housing is coupled. The bash guard 530 forms at least a portion of a bridge between the first and second supports 546, 548, with the bridge also including a portion of the side arms 510 in one embodiment. In another embodiment, the bash guard 530 defines a bridge between the first and second supports, including for example through the hinge pin 532 at one end and the interface between load bearing surfaces 826, 828 at the other end. In this way, any loads (F) applied to the bottom of the bash guard 530, for example during riding from impacts with environmental objects, are transmitted to the first and second supports 546, 548, i.e., the arms 506 and hinge lugs 544/housing 501 of the drive unit and then to the frame 52. An outer surface 556 of the energy storage device 1102, which is supported by the support bracket 508 and/or frame, is spaced apart from an inner surface 555 of the bash guard, and is thereby isolated from the bash guard and does not directly absorb any of the impact loads (F). The energy storage device 1102 is also held in place by an electrical contact 1126 engaging a drive unit battery contact connection 1124 mounted on the housing arms 506. In an open position, the bash guard 530 is disengaged from the second support 546 and an opening 560 is formed between the first and second supports 546 and 548 as shown in FIG. 25. The energy storage device 1102 is mounted to the support bracket 508, and/or frame 52, by way of the guides 524 and a locking fastener 562. The energy storage device 1102 has tracks 564 formed in sidewalls 1130 of the energy storage device 1102. In operation, the energy storage device 1102 is translated, or slid upwardly along the longitudinal axis 522 through the loop 516 or opening, with the guides 524 engaging the tracks 564. In an alternative embodiment, the tracks 564 may be formed on the support bracket and/or frame, with the guides 524 disposed on the housing 1122. The energy storage device includes a through opening 568 aligned with the openings 528 in the opposite arms of the support bracket and opening(s) 570 in the frame 52. The energy storage device 1102 is slid upwardly along the longitudinal axis 522 until the electrical contacts/connectors 1124, 1126 are coupled. The locking fastener 562 is inserted through the opening 570 in one side of the frame, the opening 528 in one of the side arms, the opening 568 in the energy storage device, and is threadably engaged with a threaded hole 528, 570 in the other of the side arms or the frame. In one embodiment, a threaded portion 1606 of the end 1602 of the locking fastener may be threadably engaged with an opposite side of the frame, or a fastener, such as a nut, secured to the support bracket and/or frame. The locking fastener 562 prevents movement of the energy storage device 1102 along the longitudinal axis 522 (e.g., Z direction), while the interface between the tracks 564 and guides 524 prevents movement normal to the longitudinal axis 522, both laterally and within the plane of the bicycle (X and Y directions).

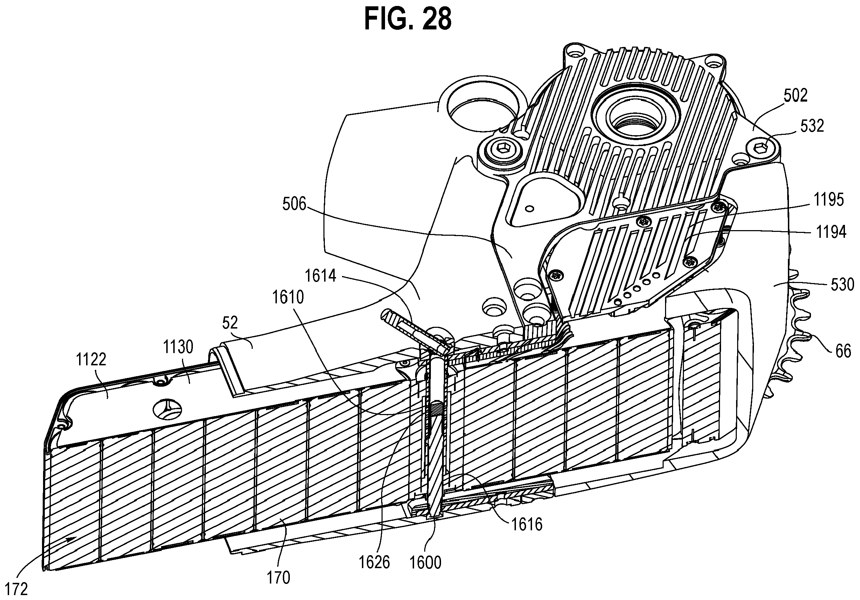

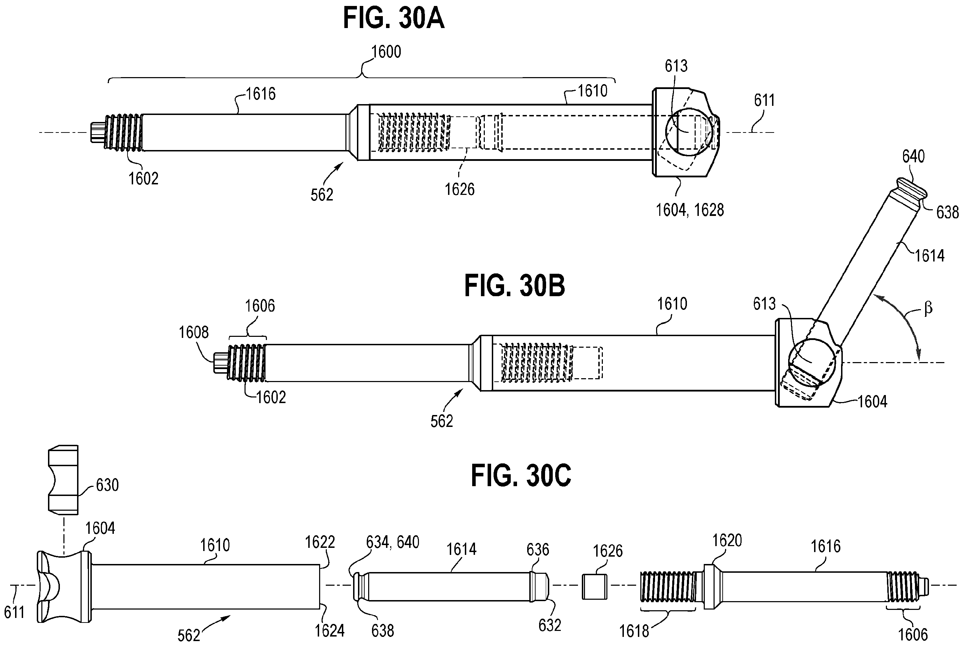

Referring to FIGS. 28-30C, the locking fastener 562 is configured as a combined locking fastener and closing tool. The fastener 562 includes a shaft 1600 having first and second ends 1602, 1604 spaced apart along a longitudinal axis 611. The shaft 1600 may have a shank portion 1616 and a tube portion 1610. The shank and tube portions 1616, 1610 may be separate, or integrally formed, and the shank may also have a tubular configuration in one embodiment. The first end 1602 includes a threaded portion 1606 and a tool component 1608 extending axially from the threaded portion 1606, with the threaded portion 1606 and tool component 1608 formed on the shank portion 1616 in one embodiment. The tube portion 1610is open at the second end 1604. A handle 1614 is axially moveable along the axis 611 from a stored position inside the tube portion 1610 as shown in FIG. 30A to an extended position outside the tube portion 1610, wherein the handle 1614 is rotatable relative to the second end 1604 from a longitudinal orientation to a transverse orientation- when in the extended position as shown in FIG. 30B. The threaded portion 1606 threadably engages one of the openings 528, 570 in one of the side arms or sides of the frame. In one embodiment, where the shank 1616 and tube portion 1610 are separate parts, the shank 1616 may include an opposite threaded end 1618 and an annular flange 1620 disposed between the threaded portions 1606, 1618. The tube portion 1610 includes an internal thread portion 1622 that is threadably engaged with the threaded end 1618 of the shank, with an end 1624 of the tube 1610 engaging the annular flange 1620 in a fully tightened configuration. A magnet 1626 is disposed in the tube 1610 and abuts the threaded end 1618 of the shank 1616. An opposite end of the tube 1610 includes a head 1628 with a pivot bushing 630 inserted therein. A handle 1614 or lever has opposite ends 632, 634, with an annular flange 636 formed adjacent one of the ends 632. The other end 634 includes an annular groove 638, which defines a grippable end cap 640 at the end 634. The handle 1614 is axially moveable along the axis 611 from a stored position inside the tube portion 1610 to an extended position outside the tube portion 1610, wherein the handle is rotatable relative to the second end 1604 from a longitudinal orientation to a transverse orientation- when in the extended position. As noted above, the term "transverse" means non-parallel, with the angle β > 0. In the stored position, the handle 1614 is disposed in the interior of the tube with one end 632 thereof magnetically attracted to, and held in the stored position by, the magnet 1626. In the stored position, the grippable end cap 640 is exposed and accessible at the end 1604 of the fastener as shown in FIG. 30B. The magnet 1626 is magnetically attracted to the end 1618 of the shank, and may also be press fit or otherwise secured in or to the end of the tube 1610, for example with adhesive.

In operation, the user may grip the end cap 640 and extract the handle, by pulling along the longitudinal axis 611 until the annular flange 636 engages the bushing 630, whereinafter the handle 1614 may be rotated about an axis 613 defined by the bushing 630. In this position, the handle defines an angle β relative to the axis 611 of the shaft, such that the handle 1614 may be rotated and thereby apply a torque to the shaft 1600 and threadably engage or disengage one of the openings 528, 570 with the threaded portion 1606. A load may be applied to the handle 1614 to rotate the tube 1610 and shank 1616 to disengage the locking fastener from the support bracket and/or frame as shown in FIG. 28. Once the locking fastener is threadably disengaged, the locking fastener may be extracted or removed by pulling the fastener from the support bracket, energy storage device and frame along the axis 611. The guide 524 and track 564, and connection between the electrical connectors 1124, 1126, continue to support and hold the energy storage device 1102 in place relative to the support bracket 508 and frame 52.

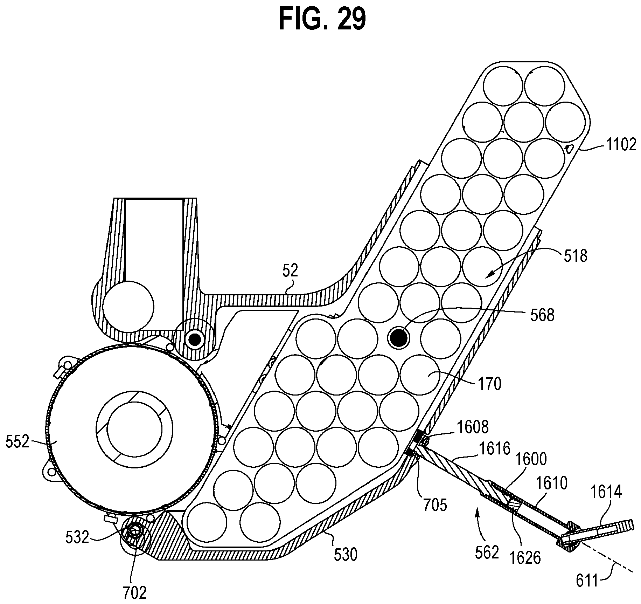

In the embodiment shown in FIGS. 29, 31 and 32, the bash guard 530 includes a mounting feature 700 defining a rotation axis 702. The bash guard 530 rotates about the axis 702 to expose the interior cavity 518 in the frame. The energy storage device 1102 is slid upwardly into, or downwardly out of, the interior cavity 518. The bash guard 530 may then be rotated about the axis 702, with a mounting feature 704 securing the opposite end 536 of the bash guard to the support bracket 508. The mounting feature 704 may include a releasable or removable fastener 705 such as a bolt, cam, spring loaded detent or other mechanism for securing the bash guard. The fastener 705 may be removed or disengaged, such that the bash guard 530 may be rotated about the axis 702 and thereby lowered to expose the interior cavity 518. In one embodiment, the end of the shank is configured as a tool portion 1608, for example with a male Philips, square, torx or hex heads, flat head, female socket, and/or other known and suitable driver heads, which are shaped to interface with corresponding tool engaging feature of the fastener 705, including for example an opening or protuberance shaped to receive the tool portion 1608. The tool portion 1608 may be engaged with the tool engaging feature of the fastener 705 as shown in FIG. 29. The user may again grip and rotate the handle 1614 about the axis 611, thereby rotating and torqueing/driving the tool portion 1608 and engaged fastener 705 about an axis 670 in a clockwise or counterclockwise direction to either tighten the fastener 705 and thereby close/lock the bash guard 530 or loosen the fastener 705 and thereby open/unlock the bash guard 530. In this way, the locking fastener 562 both secures the energy storage device 1102 in the bicycle, while also being capable of being deployed as a tool for disengaging and securing the bash guard 530. The handle 1614 allows the user to torque the fastener/tool in both situations, i.e., to tighten/loosen the fastener 562, and to tighten/loosen the fastener 705.

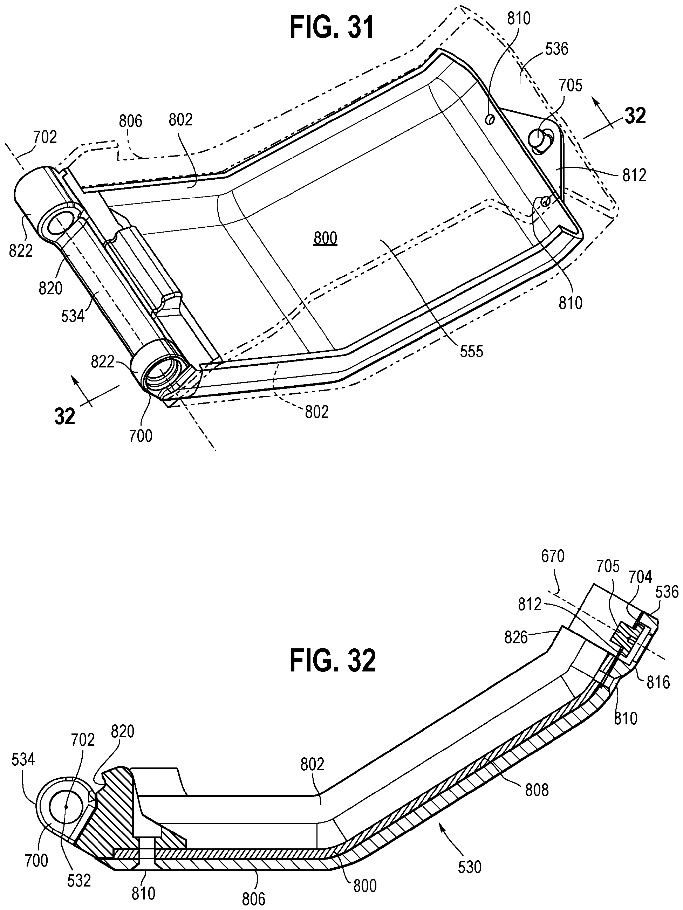

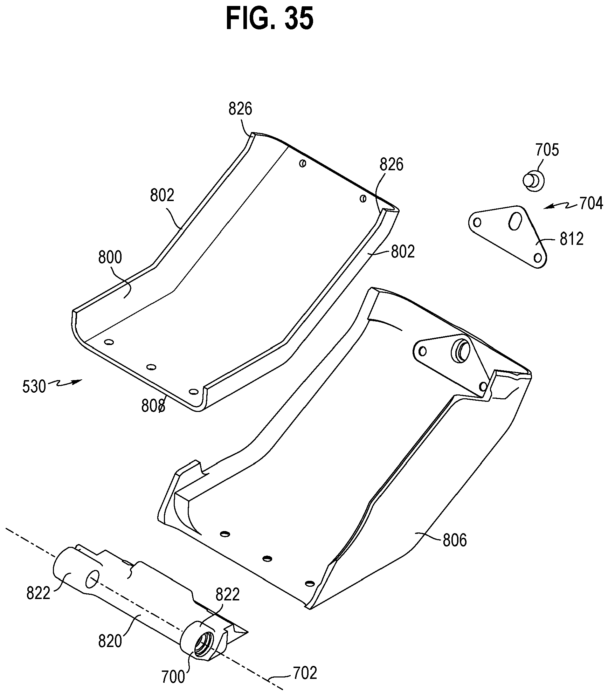

Referring to FIGS. 31, 32 and 35, the bash guard 530 includes a plate/support structure 800 extending between the mounting features 700, 704, which may be made of a rigid material, such as aluminum or steel. The plate has upturned side walls 802 to increase the bending moment of inertia and make the plate resistant to bending during an impact event and thereby transfer/beam the load to the mounting features 700, 704. The side walls 802 each include a load bearing surface 826 at the end 536 engaging a load bearing surface 828 on the housing when the bash guard 530 is in a closed position, with the impact load being transferred between the load bearing surfaces 826, 828. A cover 806 extends over the outer/exterior surface 808 of the plate 800. The cover 806 may be made of plastic, and may be easily decorated or colored to match the frame 52 of the bicycle or carry a logo or other graphics and/or images. The cover 806 is secured to the plate 800 with a plurality of fasteners 810, for example adjacent the ends 534, 536, and may be easily removed/replaced, for example if damaged. In one embodiment, shown in FIG. 32, the mounting feature 704 includes the fastener 705 captured between the cover 806 and a mounting flange 812 extending forwardly from and between the plate 800 and cover 806. The flange 812 may be captured and held between the plate 800 and cover 806 with the fasteners 810. The fastener 705 is freely rotatable in a cavity 816 defined by the cover 806, but is prevented from falling out and getting lost by way of the flange 812 covering the cavity 816. The guard 530 includes a hinge fitting 820 connected to an opposite end of the plate 800 and cover 806 with the fasteners 810. The fitting 820 includes a pair of lugs 822 defining the rotation axis 702. The fitting may be made as an aluminum die cast component.

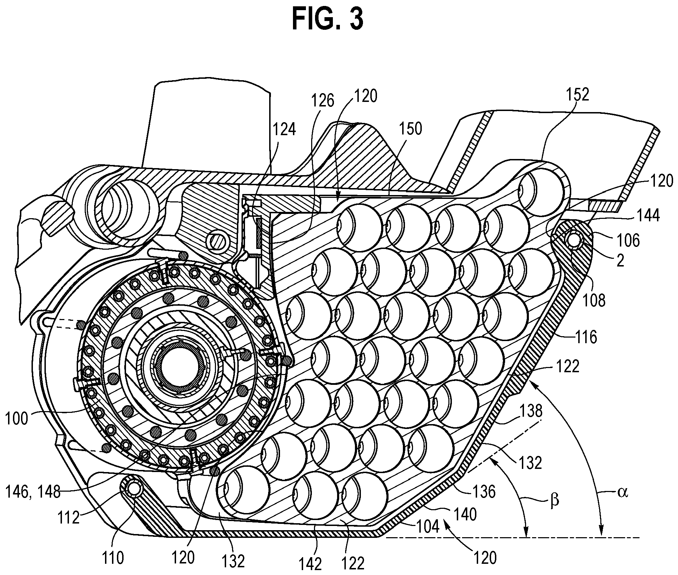

In the embodiment of FIGS. 2 and 3, the energy storage device 102 may be disposed on the bash guard 104, or engaged therewith, for example by nesting the energy storage device 102 on the plate/support structure 116. The energy storage device 102 and bash guard 104 may thereafter be rotated in an opposite direction about the axis 2 until the battery contact connection 124 on the energy storage device 102 contacts, and is engaged by, the corresponding contact 126 on the drive unit, or frame 52, which may be defined by a pair of prongs. The fastener 112 may then be inserted to fix the location of the energy storage device 102 and bash guard 104 relative to the frame 52 and drive unit 100, while maintaining the electrical connection between the drive unit 100 and energy storage device 102 through the contact connection 124 and contact 126. In this way, the energy storage device 102 is held in place relative to the frame 52 and drive unit 100 by a mounting arrangement 120.

The mounting arrangement 120 may be defined by the shape of an energy storage device housing 122 and the interface between the housing 122, the bash guard 104, frame 52 and/or drive unit 100. The phrase "mounting arrangement" refers to any structure that maintains the position of the energy storage device 102, 1102 relative to the frame 52 and/or drive unit 100, and may include the interface between the housing 122 and the frame 52 and/or drive unit 100, including the interface between the contacts 124, 126, and/or may include additional fasteners, such as bolts, tabs, clips, snaps, detents, insert/socket interfaces and/or other suitable connectors. The energy storage device 102, and the housing 122 in particular, is releasably connected to the frame 52 and/or drive unit 100, meaning the energy storage device 102 and housing 122 may be moved from an engaged position to a disengaged position, and may be replaced with another energy storage device.

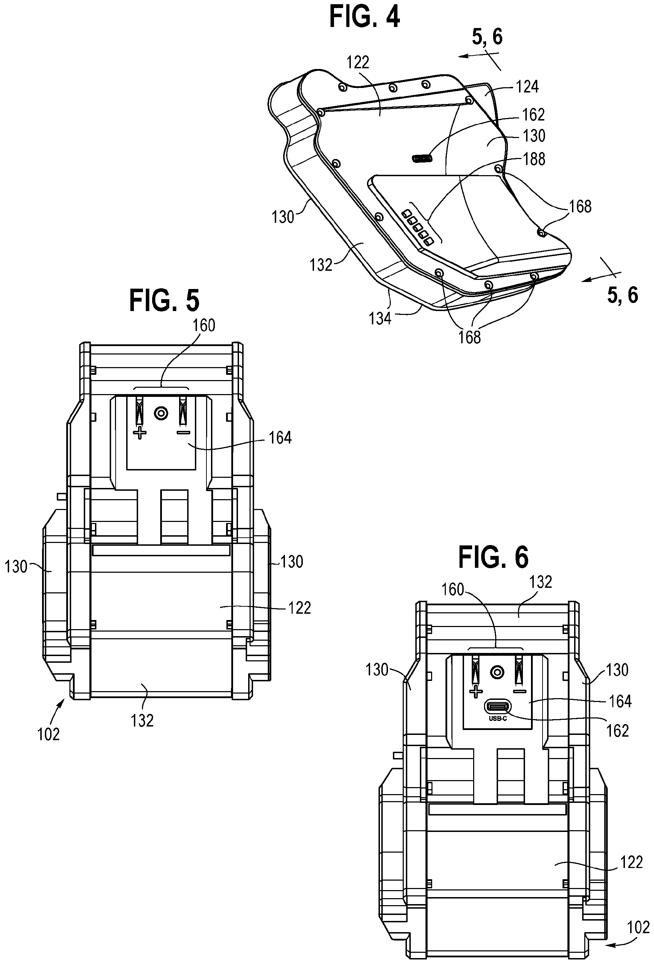

Referring to FIGS. 3, 4, 9, 10A, and 10B, the housing 122 may be configured with a pair of laterally spaced apart opposite sidewalls 130, or covers, and a peripheral wall 132 extending between and connected to the sidewalls 130. One or more of the peripheral wall 132 and sidewalls 130 may define a shell, which is covered by the other sidewall, with the sidewalls 130 each defining a cover. The sidewalls 130 have an outer edge 134 that generally mates with, or follows the contour of the peripheral wall 132. As shown for example in FIG. 3, the outer edges 134 and peripheral wall 132 have a front face 136 having an upper portion 138 and a lower portion 140 forming a first acute angle α and a second acute angle β relative to a bottom face 142. The front face 136 further includes a concave recess 144 or socket, that receives the mounting feature 106 of the bash guard 104, which is nested in the recess 144 that defines in part the mounting arrangement 120 of the energy storage device 102. The bottom face 142 extends rearwardly from the lower portion 140 of the front face 136. The housing 122 further includes a rear face 146 extending upwardly from the bottom face 142. The rear face 146 includes a second concave recess 148 that receives an outer periphery of the drive unit 100, which is nested in the second recess 148 that defines in part the mounting arrangement 120 of the energy storage device 102. A top face 150 of the peripheral wall extends forwardly from the rear face 146 and is connected to the front face 136 at a protruding corner 152. The housing includes a charging portion 154, or platform, which protrudes or extends from the peripheral wall and has a width less than the overall width of the peripheral wall. The charging portion 154 has a rear face portion 156 and an upper face portion 158. The charging portion 154 includes a pair of sidewalls 161, which may be triangular in shape. The charging portion 154 may be integrally formed with the peripheral wall. The rear face portion 156 may include one or more charge ports 160, 162, which may be formed in a plate 164 defining in part the rear face portion 156. The battery contact connection 124 is located on, and defines in part, the rear face portion 156 of the charging portion 154, and may be defined by the charge port 160. In one embodiment, shown in FIG. 6, the first charge port 160 is configured as a DC charge port, including for example a pair of electrical contacts, and the second charge port 162 is configured as a USB C charge port. The charge ports 160, 162 may be co-located, for example on the same mounting plate 164, which may be a removeable cover secured to the charging portion 154. Alternatively, one or both of the charge ports 160, 162 may be spaced apart and located on different parts of the housing, for example on one of the sidewalls 130. For example, as shown in FIGS. 4 and 5, the second charge port 162, configured as the USB C charge port, is located on an outer side wall 130, and the first charge port 160 is located on the mounting plate 164. It should be understood that the charge ports 160, 162 may be located, separately or together, on any portion of the housing. In another embodiment, shown for example in FIG. 5, the energy storage device 102 is configured with only a single charge port 160.

The sidewalls 130 and peripheral wall 132 define an interior cavity 166 of the housing. The sidewalls 130 may be attached to the peripheral wall 132 with a plurality of fasteners 168 shown as screws, or may be integrally formed therewith or connected with other fasteners, such as adhesive, snap-fit, tabs, clips and/or other suitable fasteners.

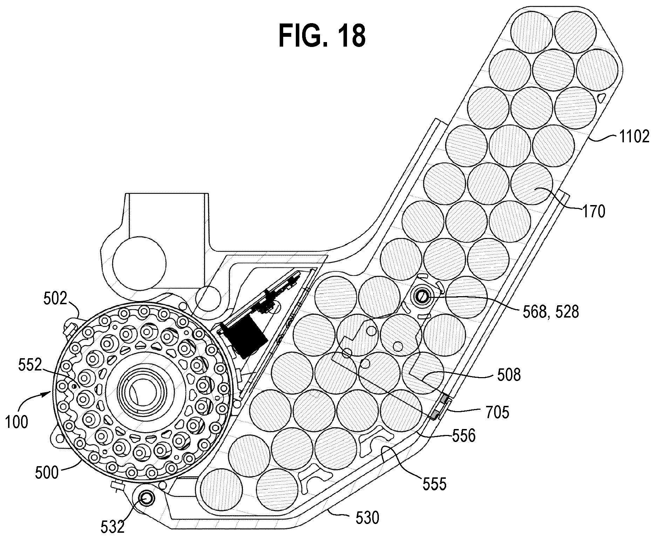

Referring to the embodiment of FIGS. 18-21, the housing 1122 of the energy storage device may be configured with a pair of laterally spaced apart opposite sidewalls 1130, or covers, and a peripheral wall 1132 extending between and connected to the sidewalls 1130. One or more of the peripheral walls 1132 and sidewalls 1130 may define a shell, which is covered by the other sidewall, with the sidewalls 1130 each defining a cover. The side walls 1130 may be coupled to the peripheral wall 1132 with one or more fasteners 1133, shown as screws, or adhesive, snap-fit, tabs, clips and/or other suitable fasteners 1133. The housing 1122 may include one or more charge ports 1125, including the battery contact connection 1126. In one embodiment, the energy storage device 1102 may include a first charge port 1125 configured as a DC charge port, including for example a pair of electrical contacts, with the charge port 1125 also defining the motor connection 1126. The energy storage device may also include a USB C port 1162.

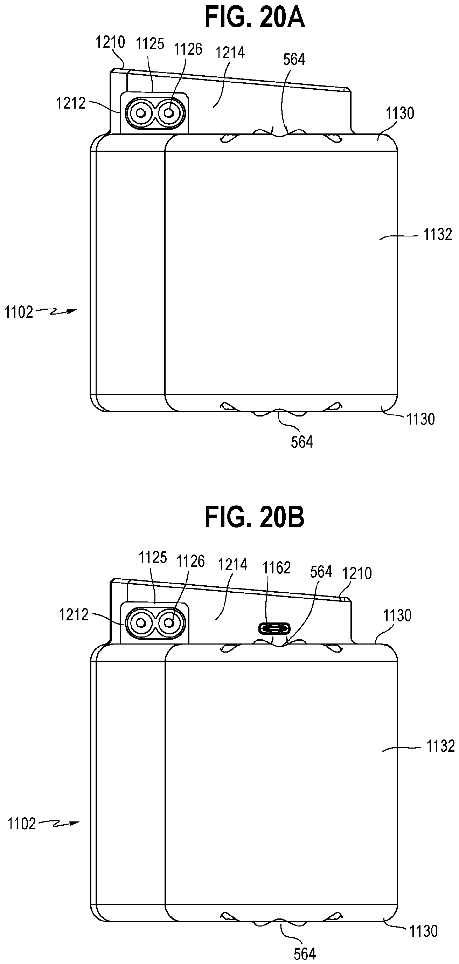

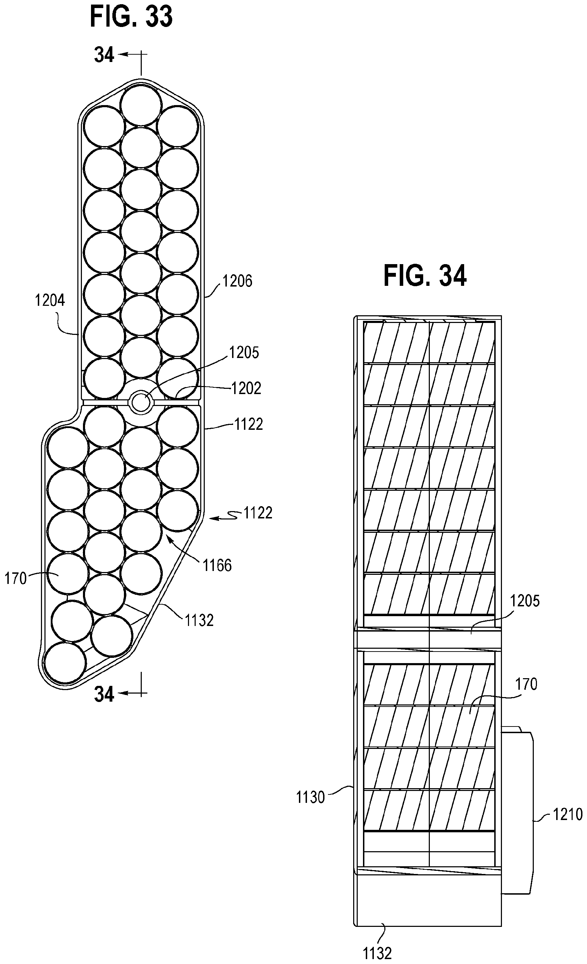

The sidewalls 1130 and peripheral wall 1132 define an interior cavity 1166 of the housing 1122. The energy storage device 1102 includes a plurality of battery cells 170 disposed or located in the housing 1122, and in the interior cavity 1166 of the housing 1122 in particular. In one embodiment, shown in FIGS. 33 and 34, a brace 1202, or wall, extends across the interior cavity 1166 and is joined with opposite spaced apart portions (e.g., top and bottom) 1204, 1206 of the peripheral wall 1132. In one embodiment, the brace 1202 has a center lug portion 1205. The center lug 1205 may define the through hole 568. The brace 1202 transmits loads applied to one side 1206 of the peripheral wall 1132. For example, the brace 1202 may transfer loads to the fastener 562 in the through hole 568 and/or to the opposite side 1204 of the peripheral wall 1132. The housing 1122 may include a plurality of braces 1202, for example longitudinally spaced along the length of the housing. The housing 1122 includes an enlarged side portion 1210, which protrudes or extends from one of the side walls 1130 and defines a charging portion 1212 having a face portion 1214. The face portion 1212 may include one or more charge ports 1125, 1162, which may also be connected to the drive unit 100 and define the battery contact connection 1126. In one embodiment, shown in FIG. 20A and B, the first charge port 1125 is configured as a DC charge port, including for example a pair of electrical contacts 1126, and the second charge port 1162 is configured as a USB C charge port (shown in FIG. 20B). The charge ports 1125, 1162 may be co-located, for example on the same face 1214 as shown in FIGS. 20A and B, which may be a removeable cover secured to the charging portion 1212. Alternatively, one or both of the charge ports 1125, 1162 may be spaced apart and located on different parts of the housing 1122, for example on one of the sidewalls 1130. It should be understood that the charge ports 1125, 1162 may be located, separately or together, on any portion of the housing 1122. In another embodiment, shown for example in FIG. 20A, the energy storage device 1102 is configured with only a single charge port 1125.

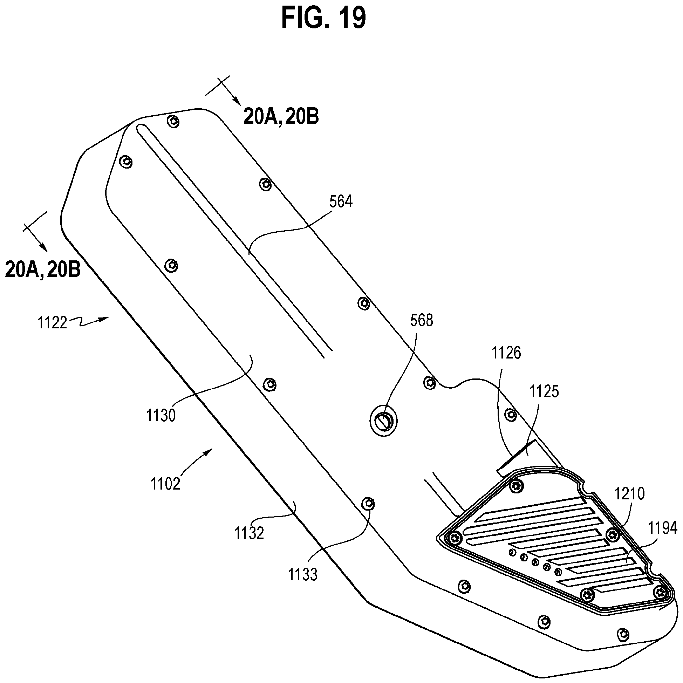

Referring to FIG. 19, a heat sink 1194 may be coupled to the housing 1122, for example to one of the side walls 1130 in an overlapping relationship with a charge controller 192 on one or more sides of a battery pack 172 that is thermally connected to the charge controller 192 electronics. In one embodiment, the heat sink 1194 is configured as a metal plate, which may have grooves 1195 or fins on an exterior surface to increase an exposed surface area thereof. More than one heat sink 1194 may be coupled to the housing adjacent the charge controller 192. In order for the heat sink(s) 1194 to properly dissipate heat from the charge controller 192, the heat sink(s) 1194 is preferably exposed to the air in a heat dissipation position.

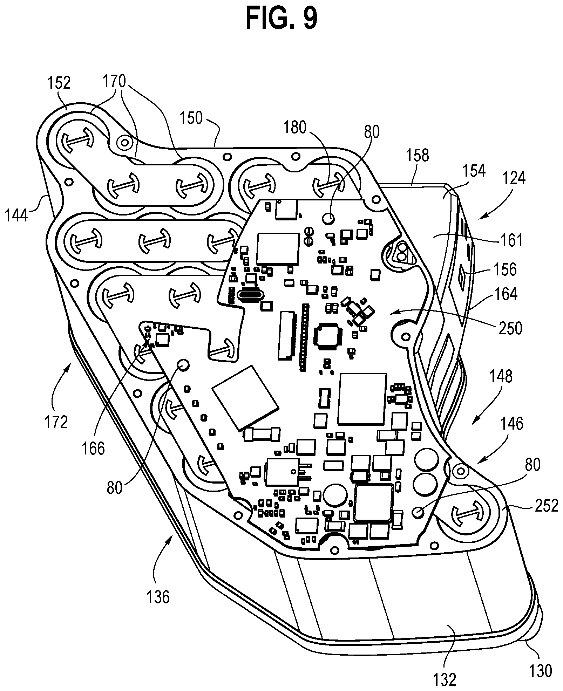

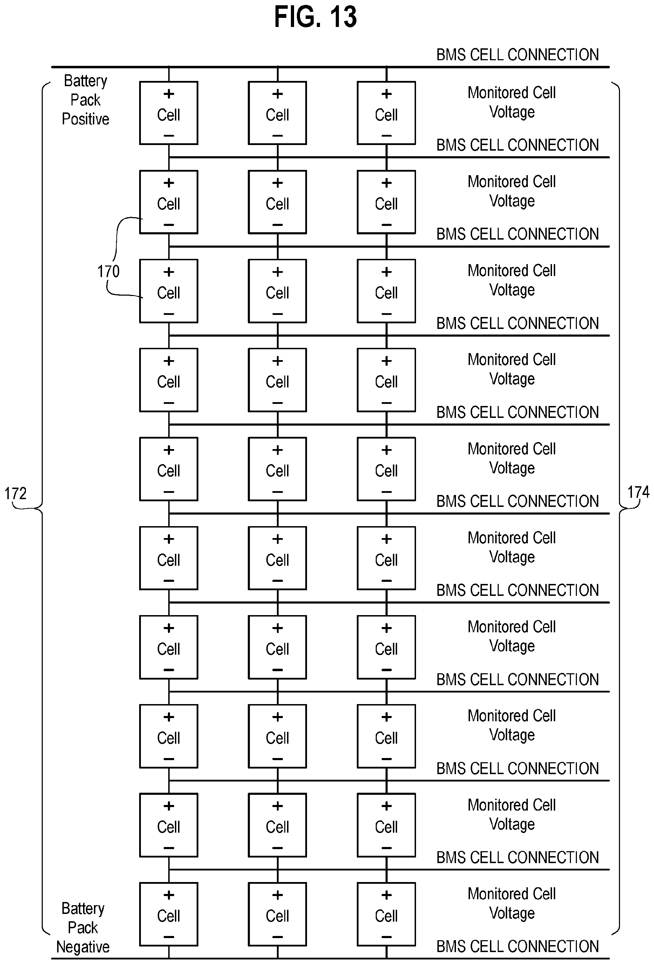

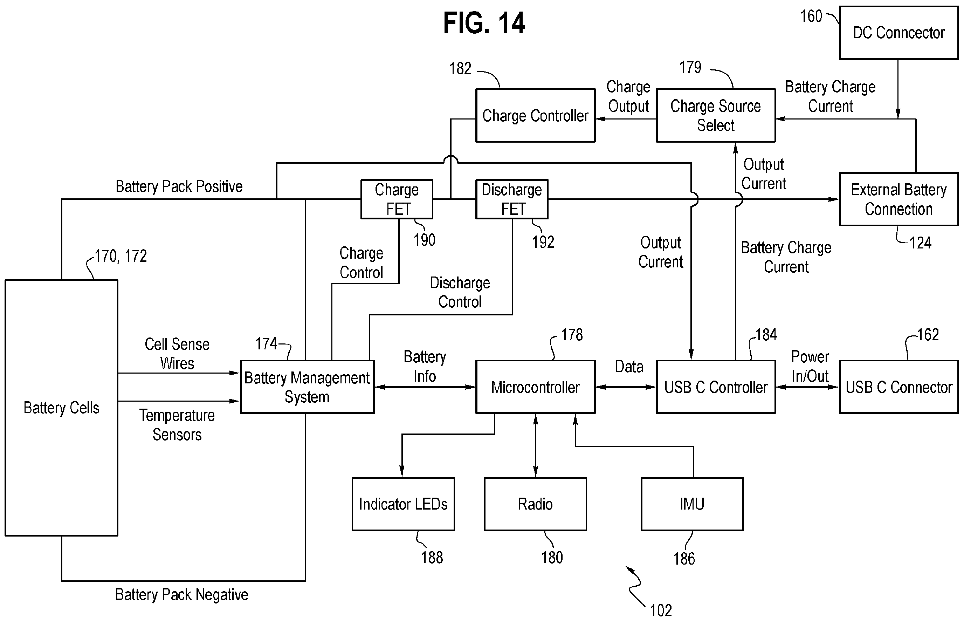

Now referring to FIGS. 9-16, 18 and 21-24, the energy storage device 102, 1102 includes a plurality of battery cells 170 disposed or located in the housing 122, 1122, and in the interior cavity 166, 1166 of the housing 122, 1122 in particular. The battery cells 170 are individual cells that are connected in series and parallel to create a battery pack 172. Battery pack cell configurations are described by the number of cells 170 in series and the number of cells 170 in parallel. A 10S-3P battery pack 172 contains ten series connected groups of 3 cells in parallel, as shown for example and without limitation in FIG. 13. There are many possible cell configurations that may be suitable for use in the energy storage device, including for example and without limitation 10S-3P, 13S-2P and 16S-2P configurations.

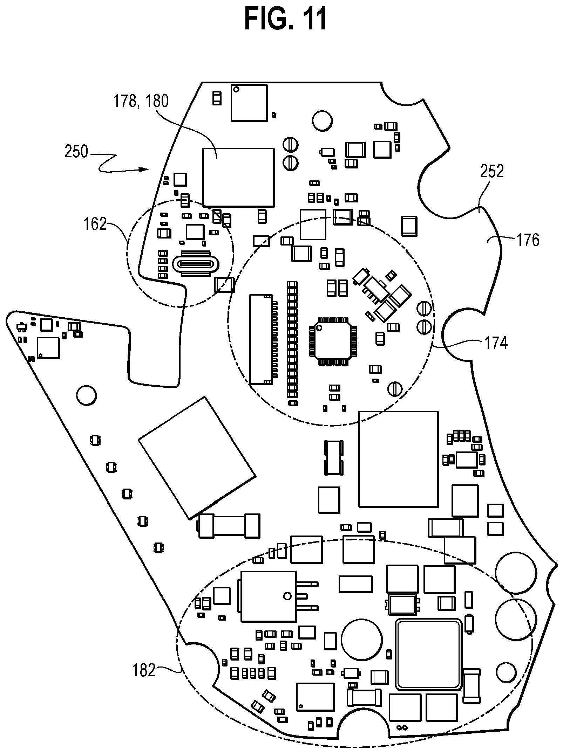

The energy storage device 102, 1102 includes a battery management system (BMS) 174 disposed in the housing 122. The BMS 174, 174 may be mounted on a printed circuit board (PCB) 176, 1176 disposed in the housing as shown in FIGS. 11 and 21-24. The PCB 176, 1176 overlies and has a connector that is plugged into the PCB from the battery cells. The PCB 176, 1176 also is disposed or mounted in the interior 166, 1166 of the housing 122, 1122, for example with openings receiving fasteners 80, 1080 connected to the housing 122, 1122. The BMS 174 connects to each series set of cells in the battery pack 172 to monitor the voltage of the cells for faults as shown in FIG. 13. The BMS 174 also measures the current into and out of the battery pack 172 to protect against over current faults. The BMS 174 may include temperature sensors that are distributed throughout the battery pack to monitor the temperature of the battery pack 172 during charge and discharge to prevent damage to the battery pack due to overheating. Using all of this information, the BMS 174 may control charge and discharge field-effect transistors (FETS) 190, 192 to either connect or disconnect the battery pack 172 from the rest of the system during charge and discharge. The BMS 174 receives configuration information from a microcontroller 178 and radio 180. Configuration information may include charge/discharge current limits, individual cell voltage limits, and over/under temperature limits, which may be preset by the microcontroller firmware. The configuration information may also be updated via a firmware update or dynamically based on information received by the microcontroller 178 from other systems on the bicycle, received for example wirelessly by the radio.

The energy storage device 102, 1102 includes a charge controller 182 disposed in the housing 122, and mounted on the PCB 176, 1176. The charge controller 182 may be connected to a DC power source. The charge controller 182 modulates the DC power to safely charge the battery pack 172. In the case of a lithium ion battery pack, the charge controller 182 supplies a constant current to the battery cells 170 until a target voltage is reached, then the charge controller supplies constant voltage while the current slowly goes down to zero. During charging the charge controller 182 communicates with and receives messages from the battery management system 174 and the microcontroller 178, such that the charge controller may modulate the charge current to provide a fast and safe charge based on the state of the battery.

The microcontroller 178 may be disposed in the housing, or interior cavity thereof, and mounted on the PCB 176, 1176. The microcontroller 178 receives data from the BMS 174, a USB C controller 184, the charge controller 182, an inertial measurement unit (IMU) 186, and/or smartphone app via wireless or wired communication. The microcontroller 178 uses the data to make determinations about how fast to charge the battery pack 172, how much power to supply from the USB C charge port 162, 1162, if connected, whether the energy storage device 102, 1102 has been dropped when not installed in the bicycle, when to display battery state of charge with indicators 188 (e.g., LED's), and/or when to enable the output of the energy storage device 102, 1102. A smartphone app may receive information about the energy storage device 102, 1102 via the microcontroller 178 and radio 180. Some of the information that may be transmitted to the user, or human/machine interface (HMI), otherwise referred to as a user interface, such as a smart phone, may be the state of charge, estimated time to charge, faults, temperature of the battery pack, voltages of individual cells, total battery pack voltage, and the health of battery pack. The smartphone app may also transmit information to the battery pack.

The energy storage device may also include indicators 188, configured in one embodiment as an array of LEDs mounted on the PCB 176, 1176, with the LEDs being visible to a user through or on the exterior of the housing. The indicators 188 may be a collection of red/blue/green (RGB) LEDs that may be used to display the state of charge, error messages, or general bicycle alerts. The LED's may be activated depending on whether the energy storage device 102, 1102 has been installed, via a battery installation detection device, e.g. sensor 198, or by the IMU 186. Indications may also be transmitted to the user via the smartphone app. A push notification for faults may alert the user in more detail of what has caused the energy storage device 102, 1102 to fail. Inside the app, battery state of charge and health may be displayed on the component screen. In one embodiment, a plurality of indicators 188 are provided, including for example five (5) RGB LEDs, to provide various indications. There are several potential ways that these LEDs may be used to indicate state of charge and faults to the user. For example, a state of charge (SOC) indication may be provided when the energy storage device 102, 1102 is not installed into the bicycle, and may be triggered for example when the energy storage device 102, 1102 is picked up or otherwise moved, with the movement being detected by the IMU 186.

The indicators 188 may be used by using only green LEDs and decreasing the brightness as state of charge decreases. For example, if there are five (5) LEDs, then each LED may turn off after another 20% state of charge has been consumed by the system. Within each 20%, the LED brightness would decrease from 100% to 0%. Alternatively, the indicators 188 may be configured as RGB LEDs, which change from Green to Orange to Red within each 20% of SOC. Faults may be indicated by lighting up specific LEDs or patterns of LEDs in a way that does not look like an SOC indication. For example, a single Red LED may be illuminated in a position that SOC could never indicate. Different positions may indicate different types of faults. Flashing LEDs in a pattern may indicate different faults based on timing and color.

The energy storage device 102, 1102 may include a sensor 198 disposed in or on the housing, which detects whether the device has been installed on the bicycle. The sensor may include a contact, force and/or spatial sensor, and may be a magnetic, button, NFC, IR sensor, or any other type of sensor, whether electrical or mechanical.

The IMU 186 may be disposed in or on the housing, and may be mounted on the PCB 176. The IMU 186 contains an accelerometer, gyroscope, and/or magnetometer. The IMU 186 may use these three sensors to determine the position of the energy storage device 102 in space, and the relative movement thereof. The IMU 186 may communicate with the microcontroller 178 to track if the energy storage device 102, 1102 has had any impacts when not installed on the bicycle. If an impact has been detected, additional safety checks may be performed to ensure the energy storage device 102, 1102 is still safe to use. Data from the IMU 186 may also be transmitted via the radio 180 to other components on the bicycle.

The energy storage device 102, 1102 includes charge/discharge FETs 190, 192, or MOSFETS, disposed in or on the housing 122, 1122, and may be mounted on the PCB 176, 1176. The FETs are used to control the flow of power into and out of the energy storage device during charge and discharge. The FETs also allow the output terminals of the battery to be inactive when the battery is not installed.

Referring to FIGS. 1, 2, 7A-8C, and 19-20B, the charge ports 160, 162, 1125 are referred to as primary charge ports. One or more secondary charge ports 200 may be located anywhere on the bicycle where a power cable 202, or wires, may be routed to the charge port 200. The terms "primary" and "secondary" are not intended to indicate that one charge port has preference, increased charging capabilities, or primacy over another charge port. Rather, those terms are used only to distinguish ports (primary) located on the energy storage device, or ports (secondary) located remote to the energy storage device. The power cable 202 is electrically connected at an opposite end to the drive unit 100, and the battery contact connection 124, 1124, such that the secondary charge port 200, when connected to an external power source, may charge, or discharge the energy storage device 102, 1102. The secondary charge port 200 is connected directly to the drive unit battery contact connection 126, 1126 via the power cord 202, which may include a power wire and a ground wire. This connection scheme prevents the need for any extra connections to the energy storage device 102, 1102 for on-bicycle charging of the energy storage device. In one embodiment, the power cord 202, or wires, are routed internally in the frame 52, although it should be understood that the wires may also be routed externally, and secured to the frame or other components for example with clips, ties or other types of fasteners.

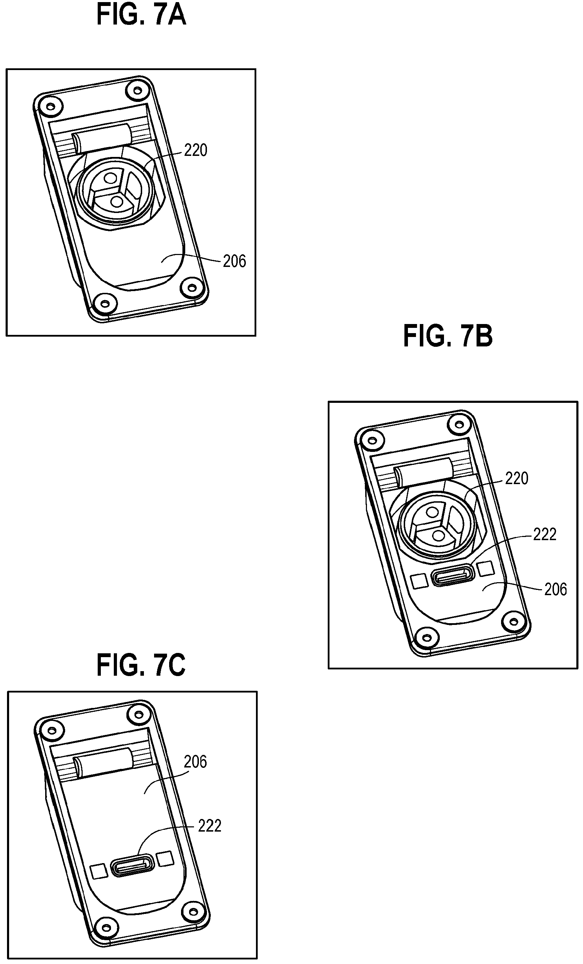

The secondary charge port 200 includes a mounting plate 206, otherwise referred to as a housing, which may be coupled to the frame 52, drive unit 100 or other component, with one or more fasteners or adhesive. The housing may also be integrally formed with the frame and/or drive unit. The secondary charge port locations may be in any orientation and may be configured with any of the DC and/or USB C configurations shown respectively in FIGS. 7A-8C. For example and without limitation, the secondary charge port location may be a location 210 on the downtube, a location 212 on the seat tube, a location 214 on the top tube, which may be paired for example with a human/machine interface (HMI), and/or a location 216 on the drive unit. More than one secondary charge port location may be provided on any one bicycle.

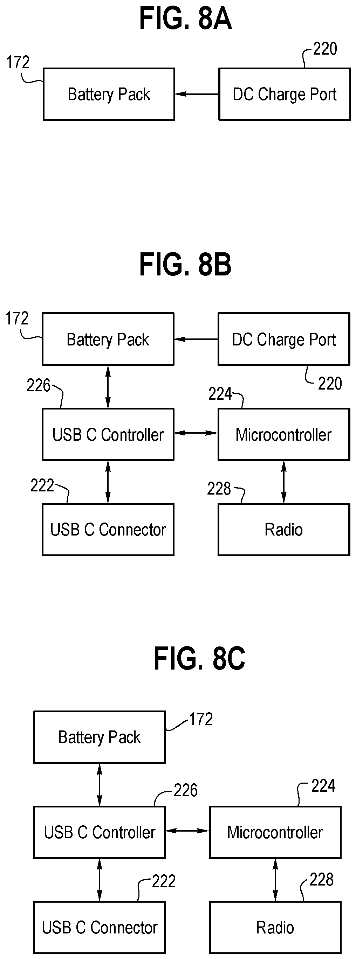

In one embodiment, shown in FIGS. 7A and 8A, the secondary charge port 200 may be configured only as a DC charge port 220 that is connected directly to the output terminals, or battery contact connection 124, of the energy storage device when the energy storage device is installed into the frame 52, as described above. The DC charge port 220 includes a DC interface, such as a two-prong receptacle, or two contact interface.

Alternatively, as shown in FIGS. 7B and 8B, the secondary charge port may include a DC charge port 220 and a USB C charge port 222, positioned on the plate 206. If configured with a USB C charge port 222, the secondary charge port may include a microcontroller 224 and USB C controller 226 to negotiate the USB C charge voltage and apply the voltage to a DC Bus, and a radio 228 to facilitate communication. In addition to charging the energy storage device 102 through both charge ports 220 and 222, this embodiment of the secondary charge port may draw power from the energy storage device 102, 1102 and supply power to accessories, such as a phone, laptop or table, connected to the USB C charge port 222.

As shown in FIGS. 7C and 8C, the secondary charge port may include only a USB C charge port 222. As with the previously described embodiment, this secondary charge port also includes a microcontroller 224 and USB C controller 226 to negotiate the USB C charge voltage and apply that to the DC Bus. In addition to charging the energy storage device 102, 1102 through charge port 222, this embodiment of the secondary charge port may also draw power from the energy storage device 102 and supply power to accessories connected to the USB C charge port 222.

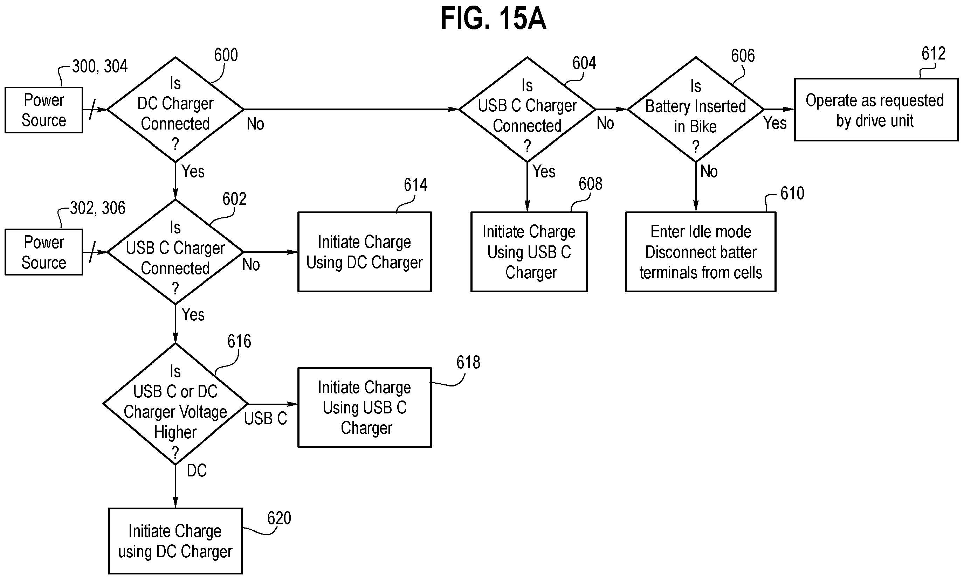

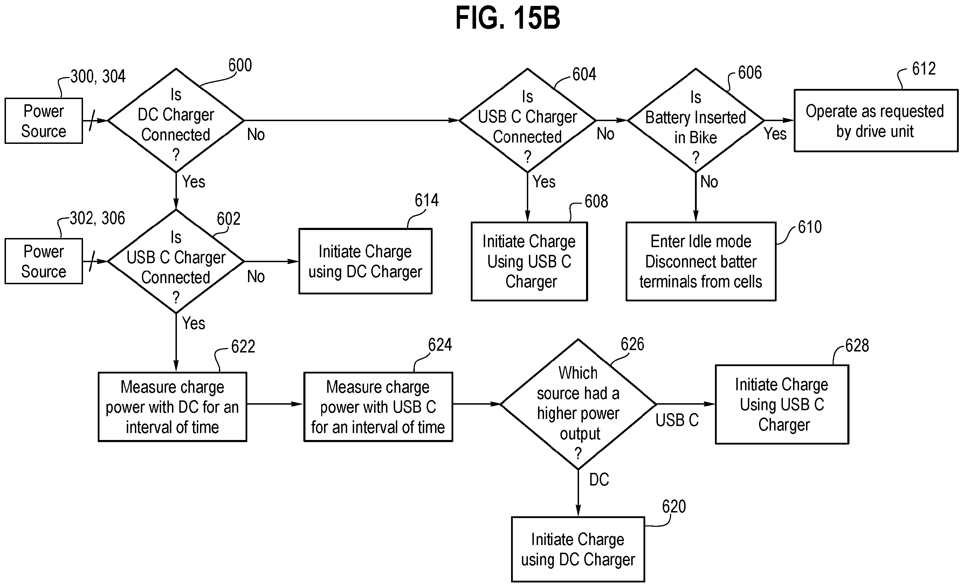

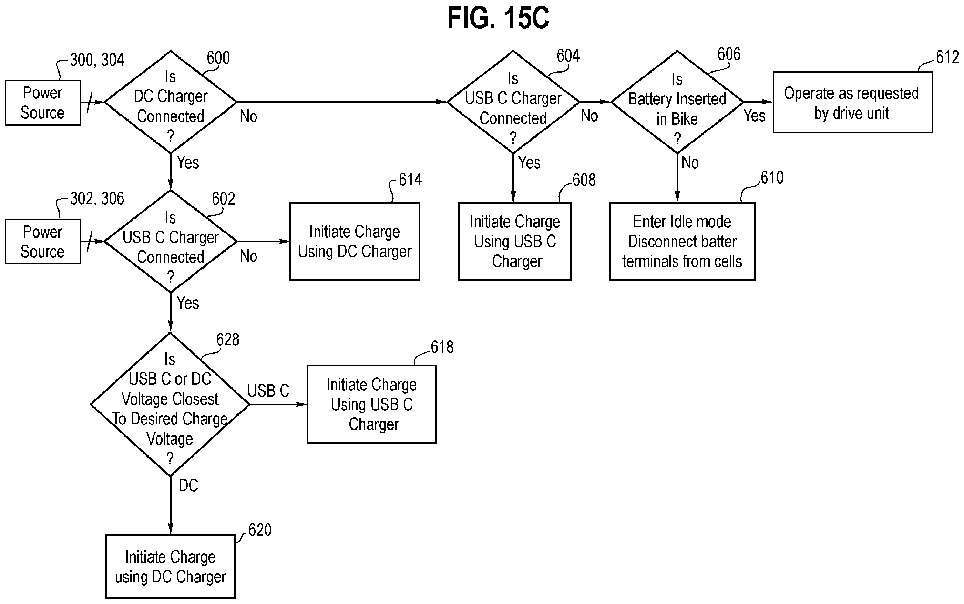

The energy storage device 102, 1102, and secondary charge port(s) 200, provide multiple potential sources for charge current. Charge current may be supplied via a DC power source 300 connected to the charge port 160, via a power source 302, 306 connected to the USB C charge port 162, 222 located on the energy storage device 102 or frame 52, or a DC power source 304 connected to the DC charge port 220 located on the frame 52. It is possible that multiple power sources 300, 302, 304, 306, otherwise referred to as charge sources, may be connected to the system at the same time. The DC power source 300 may be directly connected to the charge port 160, for example if the energy storage device 102 is removed from the bicycle. If a plurality of charge sources is connected at the same time, then the microcontroller 178 and charge source select 179 modules must decide which power source 300, 302, 304, 306, of the ones connected, to use to charge the battery pack 172. One method would be to use whichever charge source has a higher voltage as shown in FIG. 15A. Another method is to perform a short test charge with the power sources 300, 302, 304, 306, whichever are connected, at as high of a current as they can provide, then the microcontroller will determine which source has a higher power output and would use that source, as illustrated in FIG. 15B. Another alternative is to choose the charge source 300, 302, 304, 306, of the ones connected, based on which charge source voltage is closest to a desired final charge voltage, as shown in FIG. 15C. This would decrease the amount of voltage switching required by the charger during the charge process.

The method includes monitoring the voltage of the plurality of battery cells 170 with the battery management system 174, connecting first, second, third and/or fourth power sources 300, 302, 304, 306 to corresponding first, second, third and/or fourth charge ports, and determining a first, second, third and/or fourth charging characteristic of the power sources with the microcontroller. It should be understood that more than four charge ports may be connected, including for example and without limitation multiple charge ports located on the energy storage device 102, 1102, or remote thereto. For example, it should be understood that the energy storage device 102, 1102 may be configured with additional charge ports besides the two charge ports 160, 162 shown for example in FIGS. 3-6, with the those charge ports located anywhere on the housing 122, including at locations that are accessible when the energy storage device is mounted on the bicycle frame 52, and/or at locations that are obscured when the energy storage device 102 is mounted on the bicycle frame. Moreover, as noted, the charge ports 160, 162 may be located at various locations on the housing 122, 1122. The charging characteristics may include voltage, current and/or power. The microcontroller 178 then compares the first, second, third and/or fourth charging characteristics and selects one of the first, second, third and/or fourth power sources based on the comparison of the charging characteristics. The system then supplies a current to the plurality of battery cells 170 with the selected one of the power sources 300, 302, 304, 306. The method of operation may further include negotiating whether a current is being supplied to or drawn from the plurality of battery cells 170 with a USB C controller 184 and a microcontroller 178 disposed in the housing, measuring the acceleration of the housing with the IMU 186, and/or wirelessly communicating with the microcontroller 178 via the radio 180.

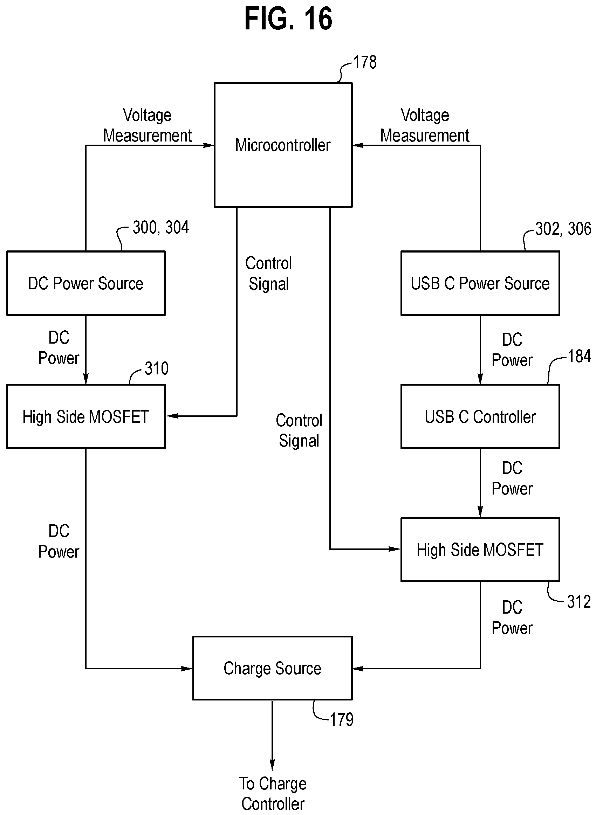

Referring to FIGS. 15A-C and 16, in operation, e.g., in acts 600, 602, the microcontroller 178 determines whether a power source 300, 302, 304, 306 is connected to the charge ports 160, 162. In act 604, the microcontroller 178 determines whether the power source 302, 306 is connected to the charge port 160, 162. In act 606, if the power source 302, 306 is not connected to the charge port 160, 162, then the microcontroller 178 determines whether the energy storage device 102 is installed on the bicycle, and if not, then in act 610, the microcontroller enters idle mode and disconnects the battery terminals from the battery cells. In act 608, if the power source 302, 306 is connected, then the energy storage device is charged by the power source 302, 306. In act 612, if the energy storage device is installed in the bicycle, then the energy storage device 102, 1102 supplies energy as requested by the drive unit 100. In act 614, if the power source 302, 306 is not connected, and the power source 300, 304 is connected, then the energy storage device is charged by the power source 300, 304. In act 616, if the power sources 300, 304, 302, 306 are connected, the microcontroller 178 is configured to select a charge source from the first power source 300 connected to a DC charge port, a second power source 302, 306, or second/third power sources, connected to the primary and secondary USB C charge ports, or a fourth power source 304 connected to the secondary DC charge port. The first power source 300 has a first voltage, the second power source 302 has a second voltages, the third power source 306 has a third voltage and the fourth power source 304 has a fourth voltage. The microcontroller 178 is configured to select the power source with the greatest voltage, for example when three power sources are presented, the microcontroller 178 selects the first power source if the first voltage is greater than the second voltage and third voltages, the second power source if the second voltage is greater than the first and third voltages, or the third power source if the third voltage is greater than the first and second voltages. In act 618, if the USB C power source 302, 306 has a greater voltage, then power source 302, 306 is connected, with the energy storage device being charged by the power source 302, 306. In act 620, if the DC power source 300, 304 has a greater voltage, then power source 300, 304 is connected, with the energy storage device being charged by the power source 300, 304.

Alternatively, the microcontroller 178 is configured to select the greatest power output of the available power sources 300, 302, 304, 306. For example, and referring to FIG. 15B, in acts 622 and 624, the charge power of the power sources 300, 304, 302, 306 are measured for an interval of time. In act 626, the microcontroller 178 selects the first power source if a first power output is greater than a second power output of a second power source and a third power output of a third power source. Conversely, the microcontroller selects the second or third power source if the respective power output thereof is the greatest. In acts 618 and 620, either the DC power source 300, 304 or the USB C power source 302, 306 charge the energy storage device 102, 1102.

Alternatively, the microcontroller 178 is configured to select the power source 300, 302, 304, 306 having a voltage closest to a desired final voltage. For example, and referring to FIG. 15C, in act 628, the microcontroller is configured to select the first power source 300, 304 if the first voltage closer to a desired final charge voltage than the second or third voltages. Conversely, the microcontroller 178 selects the second or third power source 302, 306 if the respective voltage is closest to the desired final voltage. In acts 618 and 620, either the DC power source 300, 304 or the USB C power source 302, 306 charge the energy storage device 102, 1102.

Functionally, as illustrated in FIG. 16, these processes are performed using the microcontroller 178, and two high side MOSFETs 310, 312. When in idle mode, the microcontroller 178 continually samples the voltage at the DC charge ports 160, 220, and at the USB C charge ports 162, 222. When a voltage is applied to any of these ports, the energy storage device 102, 1102 enters charge mode. If power is applied to multiple charge ports at the same time, then the microcontroller 178 measures the voltage of each of the power sources and makes the determination of which source to use based on one of the three modes described above. The microcontroller 178 then sends a signal to a high side MOSFET 310, 312 to connect the selected power source to the charge controller. Having a MOSFET acting as a switch between power sources acts like a diode, preventing power from flowing between the two power sources.

The USB C Controller 184 disposed in the housing 122, 1122 or interior cavity 166, 1166, including for example being mounted on the PCB 176, 1176, negotiates the voltage and current that the connected device will supply as a power source, or what voltage and current the battery pack will supply if the energy storage device 102 is connected to an accessory device such as a phone. What kind of device (source or sink) is connected to the USB C port 162, 1162, 222 is determined by the device connected. A power source 302, 306 will communicate to the USB C controller 184 that it is a source of power, while an accessory that that wants power from the battery pack will inform the USB C controller 184 of that status. This information is then relayed to the microcontroller 178, which is configured to decide how much power to request from the charging source based on battery data, or how much power may be supplied to a connected device. Charge decisions will be made based on battery data such as state of charge, battery or ambient temperature, charger current capabilities, or on desired state of charge from the smartphone app. The user may select a desired state of charge, desired distance capacity of the battery, or desired time to be charged in the smartphone app and the microcontroller will use this information alongside the battery data to decide how fast to charge the battery.

The location of the charge controller 182 in the housing 122, 1122 allows for the use of a single AC-DC power source as a power source. No matter how the battery voltage, chemistry, or layout changes in the energy storage device, the same AC-DC charge source may be used. Additionally, having the charge controller 182 integrated into and located inside the energy storage device, when configured with a wireless communication radio 180, allows various accessories located elsewhere on the bicycle to communicate with the energy storage device without the need for data wires to be connected to the battery. The charge source does not need to have information about the battery state like existing chargers, because charge current control is handled internally.

Another advantage of having the charge controller 182 integrated into the energy storage device 102, 1102 is that it allows for multiple charge current sources to be simultaneously connected to the energy storage device. Charge current may come from a DC source as mentioned above, or the charge current may be supplied from any USB C power source. This allows consumers to have a single standardized charger for their phone, laptop, and electrically powered bicycle.

Furthermore, by providing a USB C controller 182 located in the energy storage device 102, 1102, the device may also supply power, allowing the energy storage device to be used as a charger for external USB C accessory devices connected to the energy storage device, including for example cell phones, laptops and/or tablets.

The IMU (inertial measurement unit) 186 on the energy storage device enables the device to detect performance impacting conditions, caused for example by being dropped when not installed in the bike. If a strong enough impact is detected then the device may be disabled until additional safety checks can be completed, and/or and the indicator 188 may display a particular pattern, frequency or color to provide indicia of an impact event. In this way, the IMU 186 is configured to measure an acceleration of the energy storage device and housing 122, in or on which the IMU 186 is disposed.

Because the charge controller 182 is integrated into the energy storage device, which may receive data about energy use from the drive unit while riding, an estimation of energy use per mile may be calculated. This feature allows the user to set a desired range in an app or on the HMI, with the energy storage device 102 being charged only enough to have that level of range. This targeted charging helps protect and extend the battery health by not charging fully on every charge.

The energy storage device 102, 1102 also promotes data collection and integration. For example, then a user begins a ride using electric power drawn from the energy storage device, the drive unit may record the distance and speed travelled, while the energy storage device records the amount of energy consumed during the ride. The user is prompted on the HMI or the smartphone app to classify this ride. Potential classifications may be commuting, mountain biking, downhill, road, etc. If the user does not classify the ride here, then they may be prompted at the end of the ride.

During the ride, the energy consumption, distance, and speed data is transmitted via a wireless communication system, including the radio, to a central device for interpretation. This central device may be the energy storage device, the drive unit, HMI, or any other component connected to or communicating with the system. This information is continuously consumed to determine how much energy is being used to travel a certain distance at a certain speed. If available, elevation data from a sensor such as GPS data from a phone, altimeter, or barometer can be used to allow this calculation to take elevation into account. If the user did not classify the ride at the beginning they may be prompted again at the end of the ride. If they do not classify the ride, then the metrics of the ride will go into an unclassified or "just riding" category. Energy use per unit of distance can be displayed at the end of the ride. This data may be stored on a device in the pairing network on the bicycle and in the smartphone app. During discharge operations, the system may be used to provide estimated distance left in the battery pack given the type of ride the user is in. When the user begins a charge cycle, the user may use the smartphone app to select the type of ride they want to do next and how far they would like to ride. The energy storage device will receive this information from the app and use the past ride data to determine how much energy the energy storage device should have to complete this ride. It may also add a buffer amount of energy that the user can set.

Another option that can be controlled by the app or by an HMI is when the user wants the battery to be charged. When the user initiates a charge cycle they can use the smartphone app to set a desired state of charge and time to completion. This data will be transmitted to the energy storage device, which will use this information and the rate of charge that it determines the charger can provide to set a charge current limit to meet this desired final state.

Use of this system during riding is controlled primarily by the drive unit. The energy storage device is inserted into, or mounted on, the bicycle and a battery inserted sensor triggers the energy storage device to begin supplying power to the output terminals. Current limit is set based on the battery temperature and state of charge. This safe discharge current limit is communicated to the drive unit via the radio/microcontroller 180, 178. During riding battery temperature, state of charge, and any faults are constantly being transmitted to the drive unit and HMI to be displayed to the rider. In the event of any faults while riding this information will be sent to the drive unit so that operation can be modified to fit the fault, to the HMI so that the rider can be aware of the fault, displayed via the indicator LEDs 188, and can be sent to the smartphone app via a push notification.

The charging and idle state of the battery pack has additional options for user interaction via the smartphone app and indicator(s) 188, shown as LEDs. When the battery pack is idle, the microcontroller 178 may be polling the IMU 186 for physical movement. When the battery pack is moved, installed into the bike or not, the indicator LEDs will light up to display the state of charge of the battery pack. The user can interact with the battery pack in this state and view information stored in the battery pack, like SOC, discharge per distance data, total energy consumed, etc. Additionally, in this state a user may set a charge percent target, charge time target, or desired distance target based on riding type. Then, when a power source is connected, the system is able to determine how fast and how long to charge the pack. While charging the user can view the current SOC by moving the pack and activating the indicator LEDs. They can also open the smartphone app or HMI to view current SOC and expected time to charge completion. The user can also opt in to receive push notifications when charge has been completed.

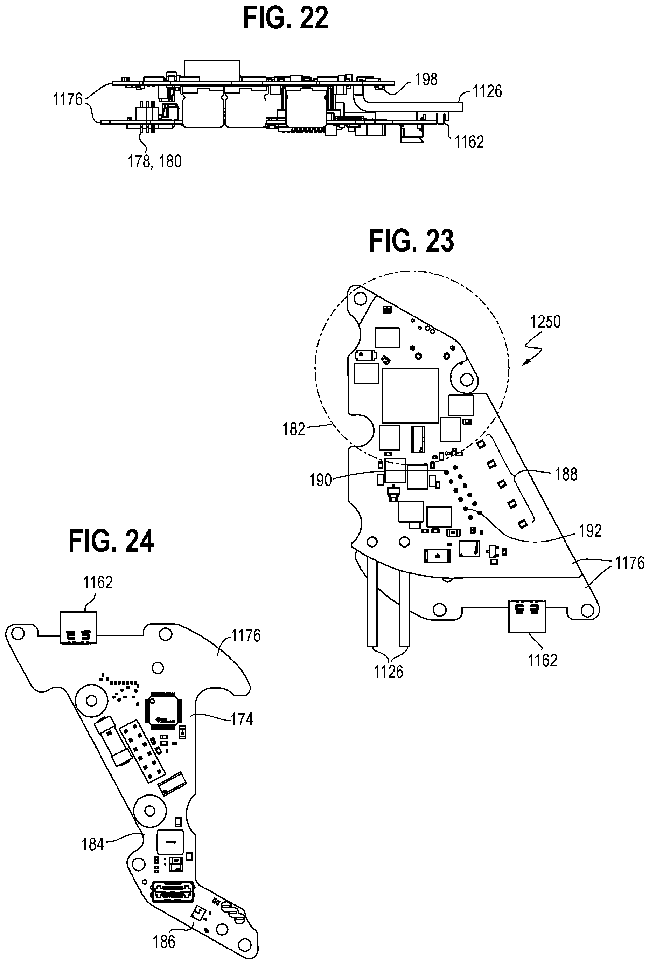

The PCB assembly 250 includes a substrate 252, which operates to connect, and/or provide structure for the circuitry and attached components of the PCB assembly. The substrate 252 may be flexible or rigid. In an embodiment, the substrate 252 is a rigid substrate providing a durable basis for the PCB assembly 250. The substrate 252 is formed to provide shape and other substance for the PCB assembly 250. In one embodiment, the PCB assembly 1250 includes a pair of spaced apart PCBs 1176, as shown in FIGS. 22-24.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The radio 180, or one embodiment of a communication interface, provides for data and/or signal communication from the energy storage device to another component of the bicycle, or an external device such as a mobile phone or other computing device. The communication interface communicates the data using any operable connection. An operable connection may be one in which signals, physical communications, and/or logical communications may be sent and/or received. An operable connection may include a physical interface, an electrical interface, and/or a data interface. The communication interface may be configured as the wireless communication system which communicates wirelessly, and as such may include one or more antennae. The communication interface provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Bluetooth^{®} and or ANT+^{™} standards may also, or alternatively, be used. Accordingly, replacement standards and protocols having the same or similar functions as those disclosed herein are considered equivalents thereof. In an embodiment, the communication interface 90 may be configured to transmit a signal indicative of a power determined from a measured strain of a body. Further, the determined power may be transmitted wirelessly.

The HMI may be one or more buttons, keypad, keyboard, mouse, stylus pen, trackball, rocker switch, touch pad, voice recognition circuit, or other device or component for communicating data between a user and the energy storage device. The HMI may be a touch screen, which may be capacitive or resistive. The HMI may include a liquid crystal display ("LCD") panel, light emitting diode ("LED"), LED screen, thin film transistor screen, or another type of display. The HMI may also include audio capabilities, or speakers.

In an embodiment, the HMI includes an LED indicator. The LED indicator lights to indicate input of the commands or other actions of the power meter system.

The HMI is configured to send and/or receive data such as control signals and/or commands to and/or from bicycle components such as the rear gear changer 37. The HMI communicates the data using any operable connection. An operable connection may be one in which signals, physical communications, and/or logical communications may be sent and/or received. An operable connection may include a physical interface, an electrical interface, and/or a data interface. The HMI provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, methods described herein may be implemented with software programs executable by a computer system, such as the circuitry. Further, in an exemplary, non-limited embodiment, implementations can include distributed processing, component/object distributed processing, and parallel processing. Alternatively, virtual computer system processing can be constructed to implement one or more of the methods or functionality as described herein.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random-access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, or a power meter system 40 to name just a few. Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

Although embodiments have been described for illustrative purposes, those skilled in the art will appreciate that various modifications, additions, and substitutions are possible, without departing from the scope and spirit of the disclosure. It is therefore intended that the foregoing description be regarded as illustrative rather than limiting, and that it be understood that all equivalents and/or combinations of embodiments and examples are intended to be included in this description.

Although certain parts, components, features, and methods of operation and use have been described herein in accordance with the teachings of the present disclosure, the scope of coverage of this patent is not limited thereto. On the contrary, this patent covers all embodiments of the teachings of the disclosure that fairly fall within the scope of permissible equivalents.

## Claims

1. An energy storage device for a bicycle comprising:
a housing comprising a mounting arrangement adapted for mounting to the bicycle;
a plurality of battery cells disposed in the housing;
a battery management system disposed in the housing and connected to the plurality of battery cells, wherein the battery management system is configured to monitor a voltage of the plurality of battery cells;
a charge controller disposed in the housing and communicating with the battery management system, wherein the charge controller is connected to the plurality of cells and is configured to modulate a current supplied to the plurality of cells; and
a charge port mounted on the housing and configured for electrical connection to a bicycle drive unit.

2. The energy storage device of claim 1, wherein the charge port comprises a DC charge port and further comprising a USB C charge port mounted on the housing and configured for connection to an external power source,
wherein as an optional feature the charge port comprises a plate, wherein the DC charge port and the USB C charge port are co-located on the plate.

3. The energy storage device of claim 1 or 2, further comprising a USB C controller and a microcontroller disposed in the housing, wherein the USB C controller is connected to the USB C charge port, and wherein the microcontroller is connected to the USB C controller and to the battery management system, wherein the USB C controller is configured to negotiate whether power is being supplied to or drawn from the plurality of battery cells.

4. The energy storage device of claim 3, further comprising an inertial measurement unit configured to measure an acceleration of the housing, wherein the inertial measurement unit is disposed in the housing and is connected to the microcontroller,
and/or wherein the microcontroller comprises a radio configured to provide a wireless communication system.

5. The energy storage device of claim 3 or 4, wherein the microcontroller is configured to select a charge source from a first power source connected to the DC charge port and/or a second power source connected to the USB C charge port.

6. The energy storage device of claim 5, wherein the first power source has a first voltage and the second power source has a second voltage, wherein the microcontroller is configured to select the first power source if the first voltage is greater than the second voltage and is configured to select the second power source if the second voltage is greater than the first voltage.

7. The energy storage device of claim 6, wherein the first power source has a first power output and the second power source has a second power output, wherein the microcontroller is configured to select the first power source if the first power output is greater than the second power output and is configured to select the second power source if the second power output is greater than the first power output,
and/or
wherein the first power source has a first voltage and the second power source has a second voltage, wherein the microcontroller is configured to select the first power source if the first voltage closer to a desired final charge voltage than the second voltage and is configured to select the second power source if the second voltage is closer to the desired final charge voltage than the first voltage.

8. The energy storage device of one of the preceding claims, further comprising a motor housing comprising a first support and a second support; a guard pivotally coupled to the first support, wherein the guard is pivotable between a closed position, wherein the guard forms at least a portion of a bridge between the first and second supports, and an open position, wherein the guard is disengaged from the second support and an opening is formed between the first and second supports; and a fastener and tool combination, wherein the fastener secures the housing to the motor housing, and wherein the tool component is engageable with one of a first or second mounting features.

9. An energy storage device for a bicycle comprising:
a housing;
a plurality of battery cells disposed in the housing;
a battery management system disposed in the housing and connected to the plurality of battery cells, wherein the battery management system is configured to monitor a voltage of the plurality of battery cells;
a charge controller disposed in the housing and communicating with the battery management system, wherein the charge controller is connected to the plurality of battery cells and is configured to modulate a current supplied to the plurality of battery cells;
a battery contact connection located on the housing and configured for electrical connection to a bicycle drive unit; and
a USB C charge port located on the housing and separate from the battery contact connection.

10. The energy storage device of claim 9, wherein the housing comprises a plate, wherein the battery contact connection comprises a DC charge port, wherein the DC charge port and the USB C charge port are co-located on the plate.

11. The energy storage device of claim 9 or 10, wherein the housing comprises spaced apart opposite sidewalls and a peripheral wall extending between and connected to the sidewalls, wherein the USB C charge port is mounted on one of the sidewalls, and the battery contact connection is mounted on the peripheral wall.

12. The energy storage device of one of claims 9 to 11, further comprising a USB C controller and a microcontroller disposed in the housing, wherein the USB C controller is connected to the USB C charge port, and wherein the microcontroller is connected to the USB C controller and to the battery management system, wherein the USB C controller is configured to negotiate whether power is being supplied to or drawn from the plurality of battery cells.

13. The energy storage device of claim 12, further comprising an inertial measurement unit configured to measure an acceleration of the housing, wherein the inertial measurement unit is disposed in the housing and is connected to the microcontroller,
and/or
wherein the microcontroller comprises a radio configured to provide a wireless communication system,
and/or
wherein the microcontroller is configured to select a charge source from a first power source connected to the battery contact connection and/or a second power source connected to the USB C charge port.

14. The energy storage device of claim 13, wherein the first power source has a first voltage and the second power source has a second voltage, wherein the microcontroller is configured to select the first power source if the first voltage is greater than the second voltage and is configured to select the second power source if the second voltage is greater than the first voltage,
and/or
wherein the first power source has a first power output and the second power source has a second power output, wherein the microcontroller is configured to select the first power source if the first power output is greater than the second power output and is configured to select the second power source if the second power output is greater than the first power output.

15. The energy storage device of claim 14, wherein the first power source has a first voltage and the second power source has a second voltage, wherein the microcontroller is configured to select the first power source if the first voltage closer to a desired final charge voltage than the second voltage and is configured to select the second power source if the second voltage is closer to the desired final charge voltage than the first voltage.
